(19) Europäisches Patentamt
European Patent Office
Office européen des brevets

(11) **EP 3 514 721 A1**

(12) **EUROPÄISCHE PATENTANMELDUNG**

(43) Veröffentlichungstag:
**24.07.2019 Patentblatt 2019/30**

(21) Anmeldenummer: **18152840.7**

(22) Anmeldetag: **22.01.2018**

(51) Int Cl.:
*G06F 21/62* (2013.01)    *G06Q 30/02* (2012.01)
*H04L 29/06* (2006.01)    *H04W 12/02* (2009.01)
*G06Q 30/06* (2012.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD TN**

(71) Anmelder: **INFOnline GmbH
53119 Bonn (DE)**

(72) Erfinder: **Passmann, Steffen
53332 Bornheim (DE)**

(74) Vertreter: **Cohausz & Florack
Patent- & Rechtsanwälte
Partnerschaftsgesellschaft mbB
Bleichstraße 14
40211 Düsseldorf (DE)**

(54) **ANONYMISIERTE METRIKINFORMATIONEN**

(57)    Offenbart wird u. a. ein Verfahren, das folgendes umfasst: Erfassen von zumindest einer Kenninformation, wobei die zumindest eine erfasste Kenninformation indikativ für zumindest einen Parameter ist, der zumindest eine zumindest einem Nutzer wiedergegebene Information charakterisiert; Bestimmen eines Datensatzes umfassend eine oder mehrere Metrikinformationen, wobei die jeweilige Metrikinformation indikativ für ein Bewertungskriterium der erfassten zumindest einen Kenninformation ist, wobei der Datensatz zumindest teilweise basierend auf der zumindest einen erfassten Kenninformation bestimmt wird; und Ausgeben bzw. Veranlassen des Ausgebens des Datensatzes. Offenbart werden ferner eine Vorrichtung zur Ausführung und/oder Steuerung dieses Verfahrens, ein System mit mehreren Vorrichtungen zur Steuerung und/oder Ausführung dieses Verfahrens und ein Computerprogramm zur Ausführung und/oder Steuerung dieses Verfahrens.

Fig.1

EP 3 514 721 A1

**Beschreibung**

**Gebiet der Erfindung**

Beispielhafte Ausführungsformen der Erfindung betreffen das Bestimmen eines Datensatzes umfassend eine oder mehrere Metrikinformationen, um beispielsweise eine Reichweite einer bereitgestellten Information ermitteln zu können, ohne einen Rückschluss auf eine Identität eines Nutzers bzw. dessen zur Wiedergabe der Information verwendetes elektronisches Gerät zu ermöglichen.

**Hintergrund der Erfindung**

Insbesondere um eine Reichweite von bereitgestellten Informationen (z. B. Werbeinformationen) im Internet zu bestimmen, ist es bekannt, bei einem Abruf von Informationen (z. B. Internetangebote) in einem Speicher des anfragenden elektronischen Endgerätes einen sogenannten Cookie zu speichern oder eine analoge Technologie (z. B. local Storage Objects, oder Fingerprinting) zu nutzen. Dieser Cookie bzw. eine von einer entsprechenden analogen Technologie gespeicherte Information kann insbesondere bei einem wiederholten Besuch aus dem Speicher des elektronischen Gerätes aus der Ferne, z. B. von einem Dritten, ausgelesen werden, um eine oder mehrere Metrikinformationen, die insbesondere eine Rückschluss über eine Reichweite der dem elektronischen Gerät bereitgestellten Informationen ermöglichen, ermitteln zu können. Diese Metrikinformationen werden in diesem Verfahren im Nachhinein auf zentralen Systemen ermittelt, indem die gespeicherten Daten über einen Identifier (z. B. Cookie-Identifier) in Verbindung gebracht werden. So ist es beispielsweise mittels des Cookies (oder entsprechend der analog genutzten Technologie) möglich, zu bestimmen, wann oder wie oft eine Information einem elektronischen Gerät bzw. dessen Nutzer bereitgestellt wurde. Ferner kann ein Nutzerverhalten von dem Cookie umfasst sein, so dass z. B. eine Klassifizierung des Nutzers möglich ist. Dies ist auch als sogenanntes Internet Audience Measurement bekannt.

Hierzu kann beispielsweise eine von dem elektronischen Gerät abgerufene Internetseite ein Skript, z. B. ein Java basiertes Skript ausführen, dass sowohl das Speichern des Cookies als auch dessen Auslesen erlaubt. Entsprechend kann ein Cookie nachverfolgt werden(sogenanntes Cookie Tracking), um beispielsweise zu ermitteln, ob sich ein Nutzer des Endgerätes z. B. eine bestimmte Werbeinformation, die auf einer Internetseite dem Nutzer mittels des elektronischen Gerätes angezeigt wurde, angeschaut hat, wie lange sich dieser die Werbeinformation angeschaut hat, ob die Werbeinformation von dem Nutzer abgerufen wurde, also angeklickt wurde, oder dergleichen Informationen, um nur einige nicht-limitierende Beispiele zu nennen.

Diese Art des Bestimmen einer Reichweite z. B. hinsichtlich einer Werbeinformation erlaubt stets, den Client, also das elektronische Gerät zu identifizieren, oder auch zu identifizieren, mittels welcher Applikation des elektronischen Gerätes die Werbeinformation abgerufen wurde oder dergleichen Identifikation. Es ist also stets ein Rückschluss auf das elektronische Gerät bzw. dessen Nutzer möglich, so dass es sich z. B. im Sinne der Europäischen Datenschutzverordnung bei einem Cookie um eine sogenannte personenbezogene Information handelt.

Insbesondere aufgrund einer Änderung in dieser EU-Verordnung, die zukünftig keine Erfassung von personenbezogenen Daten seitens eines Dritten (ohne Einverständnis des jeweiligen Nutzers) mehr erlaubt, aber auch aufgrund der Tatsache, dass Nutzer ein Interesse daran haben, keine personenbezogenen Daten von sich preiszugeben, es aber insbesondere beispielsweise für die hinter der Werbeinformation stehenden Werber (z. B. Unternehmen) von Relevanz ist, die Reichweite einer geschalteten und somit auch Kosten verursachenden Werbeinformation ermitteln zu können, wäre es wünschenswert, eine derartige Information auch zukünftig erfassen zu können.

**Allgemeine Beschreibung einiger beispielhafter Ausführungsformen der Erfindung**

Vor dem Hintergrund des dargestellten Standes der Technik ist es somit die Aufgabe, die beschriebenen Probleme zumindest teilweise zu verringern oder zu vermeiden, das heißt insbesondere eine Möglichkeit bereitzustellen, auch ohne das Hinterlegen eines Cookies oder eine analoge Technologie zu nutzen, Bewertungskriterien bestimmen zu können, um auf eine Reichweite von einem Nutzer bereitgestellten Informationen (insbesondere Webseiten Inhalte, und/oder Werbeinformationen) schließen zu können.

Gemäß einem ersten Aspekt der Erfindung wird ein Verfahren beschrieben, durchgeführt von zumindest einer ersten Vorrichtung, das Verfahren umfassend:

- Erfassen von zumindest einer Kenninformation, wobei die zumindest eine erfasste Kenninformation indikativ für zumindest einen Parameter ist, der zumindest eine zumindest einem Nutzer wiedergegebene Information charakterisiert;
- Bestimmen eines Datensatzes umfassend eine oder mehrere Metrikinformationen, wobei die jeweilige Metrikinformation indikativ für ein Bewertungskriterium der erfassten zumindest einen Kenninformation ist, wobei der Datensatz zumindest teilweise basierend auf der zumindest einen erfassten Kenninformation bestimmt wird; und

- Ausgeben bzw. Veranlassen des Ausgebens des Datensatzes.

Dieses Verfahren kann beispielsweise von einer ersten Vorrichtung, z. B. ein elektronisches Gerät wie etwa einem Smartphone, Tablet, IoT (Internet-of-Things) Gerät, Rechner, TV oder dergleichen, insbesondere mobilen Gerät, ausgeführt und/oder gesteuert werden. Insbesondere ist das elektronische Gerät dazu eingerichtet und/oder ausgebildet, eine (digitale) Information wiederzugeben bzw. einem Nutzer zugänglich zu machen.

Gemäß einem zweiten Aspekt der Erfindung wird ein Verfahren beschrieben, durchgeführt von zumindest einer zweiten Vorrichtung, das Verfahren umfassend:

- Empfangen von zumindest einem Datensatz umfassend eine oder mehrere Metrikinformationen, wobei die jeweilige Metrikinformation indikativ für ein Bewertungskriterium einer erfassten zumindest einen Kenninformation ist, wobei die zumindest eine Kenninformation indikativ für zumindest einen Parameter ist, der zumindest eine zumindest einem Nutzer wiedergegebene Information charakterisiert;
- Bestimmen eines anonymisierten Datensatzes, wobei eine oder mehrere Identifikationsinformationen, die von dem Datensatz umfasst sind, und einen Identifikation auf die Herkunft des Datensatz und/oder der von dem Datensatz umfassten einen oder mehreren Metrikinformationen zulässt, entfernt werden; und
- Ausgeben bzw. Veranlassen der Ausgabe des anonymisierten Datensatzes.

Dieses Verfahren kann beispielsweise von einer zweiten Vorrichtung, z. B. einem Server ausgeführt und/oder gesteuert werden. Alternativ kann dieses Verfahren nach dem zweiten Aspekt der Erfindung von mehr als einer Vorrichtung, z. B. einer Server-Cloud umfassend mindestens zwei Server ausgeführt und/oder gesteuert werden.

Gemäß einem dritten Aspekt der Erfindung wird ein Verfahren beschrieben, durchgeführt von zumindest einer dritten Vorrichtung, das Verfahren umfassend:

- Empfangen von zumindest einem Datensatz umfassend eine oder mehrere Metrikinformationen, wobei die jeweilige Metrikinformation indikativ für ein Bewertungskriterium einer erfassten zumindest einen Kenninformation ist, wobei die zumindest eine Kenninformation indikativ für zumindest einen Parameter ist, der zumindest eine zumindest einem Nutzer wiedergegebene Information charakterisiert, wobei sowohl der Datensatz als auch die von dem Datensatz umfassten eine oder mehreren Metrikinformationen anonymisiert sind;
- Überprüfen des Datensatzes, wobei geprüft wird, ob der empfangene Datensatz manipuliert wurde oder nicht; und
- Speichern der überprüften einen oder mehreren Metrikinformationen.

Dieses Verfahren kann beispielsweise von einer dritten Vorrichtung, z. B. einem Server ausgeführt und/oder gesteuert werden. Alternativ kann dieses Verfahren nach dem dritten Aspekt der Erfindung von mehr als einer Vorrichtung, z. B. einer Server-Cloud umfassend mindestens zwei Server ausgeführt und/oder gesteuert werden.

Gemäß dem ersten, zweiten und/oder dritten Aspekt der Erfindung wird jeweils eine Vorrichtung beschrieben, welche dazu eingerichtet ist oder entsprechende Mittel umfasst, ein Verfahren nach dem jeweiligen ersten, zweiten und/oder dritten Aspekt durchzuführen und/oder zu steuern. Vorrichtungen des Verfahrens gemäß dem ersten, zweiten und/oder dritten Aspekt sind oder umfassen insbesondere eine oder mehrere Vorrichtungen gemäß diesem ersten, zweiten und/oder dritten Aspekt.

Gemäß dem ersten, zweiten und/oder dritten Aspekt der Erfindung wird auch eine alternative Vorrichtung beschrieben, umfassend zumindest einen Prozessor und zumindest einen Speicher mit Computerprogrammcode, wobei der zumindest eine Speicher und der Computerprogrammcode dazu eingerichtet sind, mit dem jeweils zumindest einen Prozessor zumindest ein Verfahren gemäß dem ersten, zweiten und/oder dritten Aspekt auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Arbeitsspeicher. Zum Beispiel umfasst eine beispielhafte erfindungsgemäße Vorrichtung ferner jeweils Mittel zum Empfangen und/oder Senden von Informationen über ein Netzwerk wie eine Netzwerkschnittstelle. Zum Beispiel sind beispielhafte erfindungsgemäße Vorrichtungen über ein oder mehrere Netzwerke miteinander verbunden und/oder verbindbar.

Eine beispielhafte Vorrichtung gemäß dem ersten, zweiten und/oder dritten Aspekt ist oder umfasst etwa eine Datenverarbeitungsanlage, die softwaremäßig und/oder hardwaremäßig eingerichtet ist, um die jeweiligen Schritte eines beispielhaften Verfahrens gemäß dem zweiten Aspekt ausführen zu können. Beispiele für eine Datenverarbeitungsanlage sind ein Computer, ein Desktop-Computer, ein Server, ein Thinclient, eine Spielkonsole, eine digitale Plakatwand, ein Sprachassistenzsystem und/oder ein tragbarer Computer (Mobilgerät), wie etwa ein Laptop-Computer, ein Tablet-Computer, ein Wearable, ein persönlicher digitaler Assistent oder ein Smartphone. Derartige Datenverarbeitungsanlagen können ferner in weitere Vorrichtungen integriert bzw. von diesen umfasst sein, wie etwa umfasst von sogenannten connected Vehicles, bei denen die entsprechende Datenverarbeitungsanlage in ein Transportmittel (z. B. Auto, Lastkraftwagen, Motorrad, Bus, Flugzeug, Schiff, um nur einige nicht-limitierende Beispiele zu nennen) integriert bzw. von diesen umfasst ist.

Einzelne Verfahrensschritte des Verfahrens gemäß dem ersten, zweiten und/oder dritten Aspekt (beispielsweise das Erfassen von zumindest einer Kenninformation, z. B. über ein berührungsempfindliches Display) können hierbei mit einer Sensorvorrichtung, welche auch mindestens ein Sensorelement aufweist, durchgeführt werden. Ebenso können einzelne Verfahrensschritte (beispielsweise das Bestimmen eines Datensatzes), von einer weiteren Vorrichtung vorgenommen werden, welche insbesondere über ein Kommunikationsnetz mit der Vorrichtung in Verbindung steht.

Weitere Vorrichtungen können vorgesehen sein, beispielswiese ein Server und/oder beispielsweise ein Teil bzw. eine Komponente einer Server-Cloud, welche Datenverarbeitungsressourcen dynamisch für verschiedene Nutzer in einem Kommunikationssystem bereitstellt. Unter einer Server-Cloud wird insbesondere eine Datenverarbeitungs-Infrastruktur gemäß der Definition des "National Institute for Standards and Technology" (NIST) für den englischen Begriff "Cloud Computing" verstanden.

Gemäß dem ersten, zweiten und/oder dritten Aspekt der Erfindung wird auch ein jeweiliges Computerprogramm beschrieben, das Programmanweisungen umfasst, die einen Prozessor zur Ausführung und/oder Steuerung eines jeweiligen Verfahrens gemäß dem ersten, zweiten und/oder dritten Aspekt veranlassen, wenn das Computerprogramm auf dem Prozessor läuft. Ein beispielhaftes Programm gemäß der Erfindung kann in oder auf einem computerlesbaren Speichermedium gespeichert sein, welches eines oder mehrere Programme enthält.

Gemäß dem ersten, zweiten und/oder dritten Aspekt der Erfindung wird auch ein jeweiliges computerlesbares Speichermedium beschrieben, welches ein Computerprogramm gemäß dem ersten, zweiten und/oder dritten Aspekt enthält. Ein computerlesbares Speichermedium kann z.B. als magnetisches, elektrisches, elektromagnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nichtflüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Gemäß einem vierten Aspekt der Erfindung wird auch ein System beschrieben, umfassend mehrere Vorrichtungen, insbesondere ein elektronisches Gerät, einen Server, der beispielsweise dem elektronischen Gerät einen Dienst bereitstellt, und einen weiteren Server, der beispielsweise eine oder mehrere Metrikinformationen, die zumindest teilweise basierend auf von dem Dienst bereitgestellten Informationen bestimmt werden, speichert, wobei das elektronische Gerät, der Server und der weitere Server zusammen die jeweiligen Verfahren gemäß dem ersten, zweiten und dritten Aspekt ausführen und/oder steuern.

Ein beispielhaftes System gemäß dem vierten Aspekt umfasst ein beispielhaftes elektronisches Gerät zur Durchführung eines beispielhaften Verfahrens gemäß dem ersten Aspekt, einen beispielhaften Server zur Durchführung eines beispielhaften Verfahrens gemäß dem zweiten Aspekt, und einen beispielhaften weiteren Server zur Durchführung eines beispielhaften Verfahrens gemäß dem dritten Aspekt der Erfindung.

Im Folgenden werden beispielhafte Merkmale und beispielhafte Ausgestaltungen nach allen Aspekten detaillierter beschrieben:

Die zumindest eine Kenninformation wird beispielsweise zumindest teilweise basierend auf seitens der zumindest einen ersten Vorrichtung wiedergegebenen Information erfasst. Die zumindest eine Kenninformation umfasst beispielweise Environment-, Publisher- bzw. Provider-, Internetseiten-, Nutzerinformationen, oder eine Kombination hiervon. Dies können beispielsweise Informationen sein, die indikativ für die seitens der zumindest einen ersten Vorrichtung verwendete Umgebung (z. B. Betriebssystem, Applikation, Versionsnummer, oder eine Kombination hiervon), für den der zumindest einen ersten Vorrichtung bereitgestellten Dienst und/oder die von der zumindest einen ersten Vorrichtung aufgerufene Internetseite (z. B. Anbietername, Anbieterinformationen, Art des Dienstes, seitens des Anbieters speziell für eine Messung der dem Nutzer wiedergegebenen Information bereitgestellte Information, oder eine Kombination hiervon), für einen Nutzer der zumindest einen ersten Vorrichtung (z. B. eine optionale Nutzerprofilinformationen) sind.

Das Erfassen der zumindest einen Kenninformation erfolgt beispielsweise zumindest teilweise basierend auf einer ermittelten Sensorinformation. Diese Sensorinformation wird beispielsweise von einem Sensor, der beispielsweise von der zumindest einen ersten Vorrichtung umfasst oder mit dieser verbindbar ist, ermittelt. Die Sensorinformation repräsentiert beispielsweise eine Aufenthaltsortinformation, eine Eingabeinformation, oder eine Kombination hiervon, um nur einige nicht-limitierende Beispiele zu nennen. Das Erfassen der Eingabeinformation erfolgt beispielsweise seitens der zumindest einen ersten Vorrichtung, z. B. über ein berührungsempfindliches Display, ein Eingabegerät (z. B. Tastatur, Maus und/oder Mikrofon), einen Lagesensor (z. B. Gyroskop, GNSS (Global Navigation Satellite System) Empfänger), und/oder einen Beschleunigungssensor (z. B. Accelerometer). Entsprechend wird unter anderem im Sinne der Erfindung ein derartiges Eingabemittel als ein Sensor, der von der zumindest einen ersten Vorrichtung umfasst oder mit dieser verbindbar ist, verstanden. Mittels eines Lagesensors und/oder Beschleunigungssensor ist beispielsweise eine Bewegung eines elektronisches Gerätes (z. B. die zumindest eine erste Vorrichtung), dass z. B. seitens des Nutzers zur Wiedergabe der Information verwendet wird, möglich, wie etwa ein Schütteln oder eine Veränderung der Orientierung (z. B. zum Wechseln der Ansicht einer wiedergegebenen Information vom Hochformat in ein Querformat, oder vice versa).

Das Erfassen der Aufenthaltsortinformation erfolgt beispielsweise mittels eines GPS (Global Positioning Systems) Sensors. Derartige GPS Sensoren werden auch mit dem Oberbegriff GNSS Empfänger bezeichnet. Das Erfassen der Aufenthaltsortinformation erfolgt beispielsweise zusätzlich oder alternativ mittels einer Auflösung einer IP-Adresse. Dies kann beispielsweise seitens der zweiten Vorrichtung durchgeführt werden. Die aufgelöste IP-Adresse ist beispielsweise im Rahmen einer Kommunikation zwischen der zumindest einen zweiten Vorrichtung und der zumindest einen ersten Vorrichtung der letzteren zugeordnet. Die Aufenthaltsortinformation ist beispielsweise indikativ für einen Ort, an dem der Nutzer die seitens der zumindest einen ersten Vorrichtung wiedergegebene Information wiedergegeben hat.

Alternativ oder zusätzlich kann die Sensorinformation seitens eines Skriptes - auch als Skript-Sensor bezeichnet - erfasst werden. Im Sinne der vorliegenden Erfindung wird unter einem Skript-Sensor z.B. ein JavaScript bzw. ein Java basiertes Skript verstanden, welches auf einem Clientsystem (z. B. die zumindest eine erste Vorrichtung) ausgeführt wird, z. B. im Rahmen der Wiedergabe der dem Nutzer wiedergegebenen Information. Der Skript-Sensor erfasst beispielsweise die durch den Content- oder Werbeanbieter (z. B. die zumindest eine zweite Vorrichtung) bereitgestellten Inhalte (z. B. Newsartikel, Werbeinformation(en), oder dergleichen).Zusätzlich oder alternativ kann der Skript-Sensor beispielsweise das Vorkommen bzw. eine Anzahl von Abrufen der dem Nutzer wiedergegebenen Information erfassen. Eine oder mehrere dieser Parameter können z. B. von der von dem Skript-Sensor erfassten Sensorinformation repräsentiert sein.

Es versteht sich, dass das Erfassen der zumindest einen Kenninformation ferner zumindest teilweise basierend auf weiteren von einem oder mehreren Sensoren ermittelten Sensorinformationen, die insbesondere von der zumindest einen ersten Vorrichtung umfasst oder mit dieser verbindbar sind, erfolgen kann.

Die zumindest eine Kenninformation ist beispielsweise ferner indikativ für zumindest einen Parameter, der einen oder mehrere Rückschlüsse hinsichtlich einer erzielten Reichweite der wiedergegebenen Information ermöglicht.

Die wiedergegebene Information ist beispielsweise insbesondere eine auditive und/oder visuelle Information, wie etwa eine Ton-, Bild-, und/oder Videoinformation. Die wiedergegebene Information ist beispielsweise eine Werbeinformation, z. B. eine Werbeanzeige, ein Werbe(kurz)film, eine Werbeaudiospur, oder dergleichen, um nur einige nicht-limitierende Beispiele zu nennen. Die wiedergegebene Information ist beispielsweise ein Content, wie z. B. ein Newsartikel, Blogpost, Forumsbeitrag, oder dergleichen, wobei der Content insbesondere über das Internet dem Nutzer als Information wiedergegeben bzw. bereitgestellt wird.

Die eine oder mehreren Metrikinformationen repräsentieren beispielsweise sogenannte PIs (Page Impressions: reine Anzahl der Abrufe unterschiedlicher Unterseiten z.B. eines Internetangebotes); und/oder Visits (Besuche eines Internetangebotes, Page Impressions werden zu Visits gebündelt - z. B. nach einer vordefinierten Zeitspanne, etwa 30 Min. Inaktivität (keiner weiteren Page Impression auf einem spezifischen Angebot) wird ein neuer Visit gemessen)); um nur einige nicht-limitierende Beispiele zu nennen.

Der Datensatz umfassend die eine oder mehreren Metrikinformationen wird beispielsweise mittels einer Berechnung der einen oder mehreren Metrikinformationen bestimmt. Das Bewertungskriterium ist beispielsweise indikativ für eine Verweildauer (z. B. Zeitinformation, die eine Zeitspanne charakterisiert, in der die zumindest eine erste Vorrichtung die Information wiedergegeben (z. B. mittels eines Displays angezeigt) hat). Das Bewertungskriterium ist beispielsweise ferner indikativ für eine Historie, die die wiedergegebene Information mit der zumindest einen ersten Vorrichtung verknüpft. Beispielsweise ist das Bewertungskriterium indikativ dafür, ob die Information zum ersten oder zum wiederholten Mal seitens der zumindest einen ersten Vorrichtung wiedergegeben wurde.

Der bestimmte Datensatz wird anschließend ausgegeben bzw. dessen Ausgabe wird veranlasst. Insbesondere wird der bestimmte Datensatz von der zumindest einen ersten Vorrichtung an die zumindest eine zweite Vorrichtung ausgegeben. Beispielsweise hat die zumindest eine zweite Vorrichtung der zumindest einen ersten Vorrichtung einen Dienst bereitgestellt, der die seitens der zumindest einen ersten Vorrichtung wiedergegebene Information umfasst.

Das Verfahren gemäß dem ersten Aspekt der Erfindung wird beispielsweise als Skript oder Library von einer Applikation seitens der zumindest einen ersten Vorrichtung ausgeführt und/oder gesteuert. Die Applikation ist beispielsweise eine Browserapplikation, oder eine dedizierte Applikation (eine sogenannte App), oder ein Betriebssystem der zumindest einen ersten Vorrichtung.

Für den Fall, dass das Verfahren gemäß dem ersten Aspekt der Erfindung als Skript ausgeführt und/oder gesteuert wird, kann dieses beispielsweise vor der Bereitstellung des Dienstes, oder im Rahmen (z. B. während) der Bereitstellung des Dienstes von der zumindest einen zweiten Vorrichtung der zumindest einen ersten Vorrichtung übermittelt werden. Nach dem Empfang des Skriptes, kann die zumindest eine erste Vorrichtung entsprechend diesem Skript das Verfahren gemäß dem ersten Aspekt der Erfindung ausführen und/oder steuern.

Gemäß einer beispielhaften Ausführungsform nach dem ersten Aspekt der Erfindung wird der Datensatz ferner zumindest teilweise basierend auf zumindest einer lokalen (z. B. Nutzer-) Profilinformation bestimmt.

Die Profilinformation ist beispielsweise in einem von der zumindest einen ersten Vorrichtung umfassten Speicher gespeichert. Die Profilinformation umfasst oder ist indikativ für eine oder mehrere Metrikinformationen, die beispielsweise zu einem früheren Zeitpunkt bestimmt und in dem Speicher gespeichert wurden.

Die Profilinformation repräsentiert beispielsweise ferner ein Nutzungsverhalten des zumindest einen Nutzers der zumindest einen ersten Vorrichtung. Das Nutzungsverhalten ist beispielsweise indikativ für eine Art (z. B. Zeitdauer, die sich der Nutzer eine wiedergegebene Information anschaut; Platzierung der wiedergegebenen Information (z. B. formatfüllend in einem Display dargestellt oder nicht, oder nur teilweise dargestellt), Interesse des Nutzers an einer wiedergegebenen Information, oder dergleichen, um nur einige nicht-limitierende Beispiele zu nennen). Dies kann beispielsweise über einen Sensor, der beispielsweise die Art der Wiedergabe der dem Nutzer bereitgestellten Information z. B. als Sensorinformation erfasst, erfolgen. Hierfür kann beispielsweise ein Sensormittel verwendet werden, dass in der Lage ist zu erfassen, wann, wie lange oder wo eine wiedergegebene Information auf einem beispielsweise von der zumindest einen ersten Vorrichtung umfassten Display dargestellt wurde. Dies kann beispielsweise entsprechend als Sensorinformation erfasst werden.

Das Bestimmen des Datensatzes erfolgt beispielsweise zumindest teilweise basierend auf der erfassten zumindest einen Kenninformation und der Profilinformation. Hierzu wird beispielsweise die erfasste Kenninformation mit zumindest einem Teil der Profilinformation, z. B. einem von der Profilinformation repräsentierten Nutzungsverhalten, verglichen, um beispielsweise eine Metrikinformation bestimmen zu können, die indikativ für ein Interesse des zumindest einen Nutzers an der wiedergegebenen Information ist. Zusätzlich oder alternativ erfolgt das Bestimmen des Datensatzes beispielsweise zumindest teilweise basierend auf einer Auswertung von einem oder mehreren relevanten Zeitstempeln, die mit der zumindest einen Kenninformation assoziiert oder von dieser umfasst sind. Derartige Zeitstempel sind beispielsweise von einer Datums- und/oder Zeitinformation repräsentiert, die im Nachfolgenden noch detaillierter beschrieben werden. Derart erfolgt insbesondere das Bestimmen (z. B. Berechnung) des Datensatzes direkt auf einem Clientsystem (z. B. die zumindest eine erste Vorrichtung) selbst.

Entsprechend kann die zumindest eine erste Vorrichtung den Datensatz umfassend eine oder mehrere Metrikinformationen bestimmen (z. B. bilden). Dabei können auch jene Metrikinformationen seitens der zumindest einen ersten Vorrichtung bestimmt werden, wie etwa ein Visit (vgl. vorstehend diesbezüglich Ausführungen), der nach Zusammenhängen in den Daten verlangt, ohne dabei z. B. auf einen Identifier desjenigen Nutzer bzw. dessen elektronischen Gerät, dem die Information wiedergegeben wurde, zurückgreifen zu müssen. Dabei kann sich beispielsweise die zumindest eine erste Vorrichtung insbesondere des Rückgriffs auf einen Zeitstempel bedienen, der beispielsweise in einem Speicher hinterlegt ist und aktualisiert werden kann. Entsprechend kann das Bestimmen des Datensatzes ferner zumindest teilweise basierend auf einem derartigen Zeitstempel erfolgen. Beispielsweise wird ein derartiger Zeitstempel in Relation zur aktuellen Zeit gesetzt, und der Datensatz umfassend die eine oder mehreren Metrikinformationen wird bestimmt (z. B. gebildet).

Alternativ kann eine weitere Profilinformation zentral gespeichert sein, z. B. in einer über ein Kommunikationsnetz (z. B. dem Internet) verfügbaren Datenbank. Das Bestimmen des Datensatzes kann ferner beispielsweise zumindest teilweise basierend auf einer derartigen zentralen Profilinformation erfolgen. Somit kann zumindest eine Profilinformation im Rahmen des Bestimmens des Datensatzes berücksichtigt werden, die beispielsweise nicht unmittelbar von dem z. B. als Skript oder Library ausgeführten Verfahren nach dem ersten Aspekt der Erfindung umfasst ist.

Gemäß einer beispielhaften Ausführungsform aller Aspekte der Erfindung charakterisiert die zumindest eine Kenninformation einen oder mehrere der folgenden Parameter i) bis iv) hinsichtlich der wiedergegebenen Information:

i) Identifier eines dem zumindest einen Nutzer bereitgestellten Dienstes;
ii) Datums-, Zeit- und/oder Ortsinformation indikativ für ein Datum, eine Zeit und/oder einen Ort hinsichtlich des dem zumindest einen Nutzer bereitgestellten Dienstes;
iii) Besuchsinformation hinsichtlich der wiedergegebenen Information; und
iv) Clientinformation indikativ für einen Typ der Vorrichtung, welcher der Dienst bereitgestellt wurde.

Die zumindest eine Kenninformation charakterisiert folglich einen oder mehrere der Parameter i) bis iv) in Abhängigkeit der wiedergegebenen Information. Der darauf basierende Datensatz selbst lässt dabei keine Rückschlüsse auf den Nutzer oder dessen elektronisches Gerät (z. B. ein Clientsystem) selber zu. Beispielsweise charakterisiert die zumindest eine Kenninformation einen Identifier, der den zumindest einen Dienst, der die wiedergegebene Information umfasst identifiziert. Zumindest teilweise basierend auf dem Identifier kann also beispielsweise ein Rückschluss auf den spezifischen Dienst erfolgen, der die wiedergegebene Information (z. B. ein Webseiten Inhalt, wie eine Werbeinformation oder ein sonstiger Content) umfasst. Diese Information wird beispielsweise seitens eines Displays, das z. B. von der zumindest einen ersten Vorrichtung umfasst ist, wiedergegeben. Ferner kann beispielsweise die zumindest eine Kenninformation charakterisieren, wann und/oder wie lange die Information wiedergegeben wurde (repräsentiert von einer Datums- und/oder Zeitinformation, im Rahmen der vorliegenden Erfindung auch als Zeitstempel bezeichnet), und/oder an welchem Ort sich die zumindest eine erste Vorrichtung zum Zeitpunkt der Wiedergabe der Information befand.

Die Besuchsinformation kann beispielsweise repräsentieren, ob es sich um eine erste oder um eine wiederholte Wiedergabe der Information handelte. Ferner kann die Besuchsinformation beispielsweise repräsentieren, ob sich der zumindest eine Nutzer für die wiedergegebene Information interessiert hat oder nicht. Hierzu kann beispielsweise - z. B. mittels eines entsprechenden Sensors - erfasst werden, ob z. B. der Nutzer die wiedergegebene Information angeklickt hat oder nicht, und/oder ob der Nutzer beispielsweise einen Scrollvorgang bei der wiedergegebenen Information pausiert hat, oder ähnliches, um nur einige nicht-limitierende Beispiele zu nennen. Dies kann von einer entsprechend ermittelten Sensorinformation repräsentiert sein.

Die Clientinformation kann beispielsweise den Typ der Vorrichtung, das zur Wiedergabe der Information verwendete Betriebssystem der Vorrichtung, und/oder die zur Wiedergabe der Information verwendete Applikation repräsentieren.

Gemäß einer beispielhaften Ausführungsform nach dem ersten Aspekt der Erfindung umfasst das Verfahren ferner:

- Signieren des bestimmten Datensatzes; und/oder
- Verschlüsseln des Datensatzes bzw. des signierten Datensatzes;

wobei der signierte und/oder verschlüsselte Datensatz ausgegeben bzw. dessen Ausgabe veranlasst wird.

Entsprechend ist es für die zweite Vorrichtung (z. B. ein von einem Provider und/oder Publisher von Informationen betriebenen Server) nicht möglich auf die von dem Datensatz umfasste Metrikinformation oder die mehreren Metrikinformationen zu zugreifen, da beispielsweise der Datensatz, der der zweiten Vorrichtung beispielsweise von der ersten Vorrichtung (z. B. elektronisches Gerät eines Nutzers) übermittelt wird, vor der Übertragung verschlüsselt wird. Entsprechend empfängt die zweite Vorrichtung beispielsweise nur einen verschlüsselten Datensatz, dessen Inhalt die zweite Vorrichtung entsprechend nicht einsehen kann.

Das Signieren erfolgt beispielsweise mittels einer privaten Schlüsselinformation. Hierzu wird beispielsweise eine Signaturinformation bestimmt (z. B. berechnet), z. B. basierend auf dem auszugebenden Datensatz und der privaten Schlüsselinformation. Diese Signaturinformation wird beispielsweise zusammen mit dem Datensatz ausgegeben. Die Integrität des anschließend, z. B. von der zumindest einen zweiten Vorrichtung empfangenen Datensatz kann beispielsweise mittels einer öffentlichen Schlüsselinformation überprüft werden, wobei ferner auch die Herkunft bzw. Identität des Absenders (im vorliegenden Fall die Identität der zumindest einen ersten Vorrichtung) überprüft werden kann.

Durch das Signieren und/oder das Verschlüsseln kann eine Manipulationssicherheit des übermittelten Datensatzes sichergestellt werden, da zum einen die vorstehend angeführten Überprüfung der Integrität des Datensatzes fehlschlägt. Zum anderen kann gewährleistet werden, dass keine gefälschte Metrikinformation oder keine gefälschten Metrikinformation z. B. indikativ für eine Reichweite der wiedergegeben Information erfasst, übermittelt und abschließend gespeichert werden (z. B. seitens der zumindest einen dritten Vorrichtung), da die zumindest eine zweite Vorrichtung durch die Verschlüsselung nicht auf die von dem Datensatz umfassten Metrikinformationen zugreifen kann.

Gemäß einer beispielhaften Ausführungsform nach dem ersten Aspekt der Erfindung wird die zumindest eine Kenninformation zumindest teilweise basierend auf einem der ersten Vorrichtung bereitgestellten Dienst erfasst.

Der bereitgestellte Dienst ist beispielsweise ein über das Internet bereitgestellter Dienst, wie z. B. eine Internetseite, eine Applikation, ein (Kurz-) Film, ein Podcast, oder dergleichen Dienst, um nur einige nicht-limitierende Beispiele zu nennen.

Die Bereitstellung des Dienstes erfolgt beispielsweise seitens der zumindest einen zweiten Vorrichtung, die beispielsweise das Verfahren gemäß dem zweiten Aspekt der Erfindung ausführt und/oder steuert. Die zumindest eine zweite Vorrichtung stellt den Dienst beispielsweise basierend auf einer empfangenen Anfrage zur Bereitstellung des Dienstes bereit. Eine derartige Anfrage wird beispielsweise von der zumindest einen ersten Vorrichtung im Rahmen der Ausführung und/oder Steuerung des Verfahrens gemäß dem ersten Aspekt der Erfindung an die zumindest eine zweite Vorrichtung übermittelt bzw. gesendet.

Gemäß einer beispielhaften Ausführungsform aller Aspekte der Erfindung wird eine (z. B. öffentliche und/oder private) Schlüsselinformation zum Verschlüsseln des bestimmten Datensatzes verwendet.

Die Schlüsselinformation repräsentiert beispielsweise einen öffentlichen und/oder privaten Schlüssel. Für den Fall, dass ein öffentlicher Schlüssel zum Verschlüsseln verwendet wird, ist dieser Schlüssel beispielsweise in einem Speicher der zumindest einen ersten Vorrichtung verfügbar, so dass die zumindest eine erste Vorrichtung diesen Schlüssel zum Verschlüsseln des Datensatzes verwenden kann. Es versteht sich, dass zur Gewährleistung der Manipulationssicherheit der von dem Datensatz umfassten einen oder mehreren Metrikinformationen, insbesondere die zumindest eine zweite Vorrichtung, die den Datensatz beispielsweise an die zumindest eine dritte Vorrichtung weiterleitet, keine Kenntnis des Schlüssels hat. Derart kann sichergestellt werden, dass die zumindest eine zweite Vorrichtung keine Manipulation vor der Ausgabe (z. B. Weiterleiten) des Datensatzes an die zumindest eine dritte Vorrichtung unternehmen kann.

Der seitens der zumindest einen zweiten Vorrichtung (z. B. ein Publisher-Server zur Bereitstellung von Diensten im Internet, wie Internetseiten) empfangene Datensatz, der z. B. von der zumindest einen ersten Vorrichtung gesendet wurde, ist beispielsweise von der zumindest einen ersten Vorrichtung signiert und verschlüsselt.

Das Bestimmen des anonymisierten Datensatzes umfasst beispielsweise das Entfernen von Identifikationsinformationen (z. B. Identifier), die von dem Datensatz umfasst sind. Beispielsweise wird der Datensatz mittels eines Datenpakets, das einen Headerteil und einen Nutzdatenteil - auch als Payload bezeichnet - umfasst, übermittelt. In dem Headerteil befinden sich beispielsweise Adressierungsinformationen, wie z. B. eine IP-Adresse, von der das Datenpaket stammt. Um sicherstellen zu können, dass z. B. eine Identifikation der Herkunft des Datensatz nicht möglich ist, umfasst das Bestimmen des anonymisierten Datensatzes beispielsweise ein Entfernen von derartigen Identifikationsinformationen. Insbesondere werden sämtliche ebenfalls als personenbezogene Daten bezeichnete Informationen, die von dem empfangenen Datensatz umfasst sind, aus bzw. von diesem entfernt.

Anschließend wird der anonymisierte Datensatz ausgeben bzw. dessen Ausgabe wird veranlasst. Beispielsweise wird der anonymisierte Datensatz an die zumindest eine dritte Vorrichtung gesendet bzw. übermittelt.

Derart ist es möglich, nur anonyme Daten an die zumindest eine dritte Vorrichtung zu übertragen. Unter anonyme Daten wird insbesondere der Datensatz umfassend eine oder mehrere Metrikinformationen verstanden (der entsprechend anonymisiert ist). Entsprechend ist es nicht möglich einen Nutzer bzw. dessen elektronisches Gerät zu identifizieren, z. B. für die dritte Vorrichtung (z. B. ein Server von einem Dienstanbieter, der beispielsweise als Dienst eine Information hinsichtlich von einer Information (z. B. ein Webseiten Inhalt, wie eine Werbeinformation oder ein sonstiger Content) erzielte Reichweite bereitstellt), die gemäß dem Verfahren nach dem dritten Aspekt der Erfindung die eine oder mehreren Metrikinformationen speichert. Da der Datensatz umfassend diese eine oder mehreren Metrikinformationen der dritten Vorrichtung beispielsweise von der zweiten Vorrichtung übermittelt wird, existiert weder eine direkte noch eine indirekte Kommunikationsbeziehung zwischen der ersten Vorrichtung (z. B. das elektronische Gerät eines Nutzers) und der dritten Vorrichtung, sondern lediglich eine direkte oder indirekte Kommunikationsbeziehung zwischen der zweiten Vorrichtung (z. B. ein von einem Provider und/oder Publisher von Informationen betriebener Server) und der dritten Vorrichtung. Lediglich die zweite Vorrichtung hat neben der ersten Vorrichtung Kenntnis über eine Identität der ersten Vorrichtung, da die zweite Vorrichtung beispielsweise der ersten Vorrichtung einen Dienst (z. B. eine Internetseite) bereitstellt.

Gemäß einer beispielhaften Ausführungsform nach dem zweiten Aspekt der Erfindung wird vor dem Empfangen des Datensatzes ein Dienst bereitgestellt, wobei der empfangene Datensatz zumindest teilweise basierend auf einer von dem bereitgestellten Dienst umfassten Information bestimmt wurde.

Gemäß einer beispielhaften Ausführungsform nach dem zweiten Aspekt der Erfindung werden im Rahmen der Bereitstellung des Dienstes Adressierungsinformationen zur Übermittlung des Dienstes bzw. von dem Dienst umfassten Informationen und zum Empfang des Datensatzes übermittelt.

Eine derartige Adressierungsinformation kann beispielsweise standardmäßig in einem zur Übermittlung von Informationen verwendeten Kommunikationsprotokoll (z. B. ein TCP/IP-Kommunikationsprotokoll) verwendet werden. Die übermittelten Informationen werden mittels einer oder mehrerer Datenpaket übermittelt, die neben einem Nutzdaten tragenden Teil einen vorstehend bereits erläuterten Headerteil umfassen, in dem z. B. eine Adressierungsinformation des Absenders und eine weitere Adressierungsinformation des Empfängers ersichtlich sind.

Ferner kann derart zwischen den beteiligten Entitäten (z. B. erste Vorrichtung (z. B. Client)) und zweite Vorrichtung (z. B. Publisher) die Bereitstellung des Dienstes gewährleistet werden.

Gemäß einer beispielhaften Ausführungsform nach dem zweiten Aspekt der Erfindung werden nach dem Empfang des Datensatzes und vor der Ausgabe des anonymisierten Datensatzes eine oder mehrere weitere Metrikinformationen zu dem empfangenen Datensatz hinzugefügt. Beispielsweise kann aufgrund der mit einem Datenpaket, das den Datensatz umfasst, übermittelten Adressierungsinformation eine Ortsinformation indikativ für z. B. eine Geolokation (z. B. ein Aufenthaltsort) bestimmt werden, der indikativ für den Aufenthaltsort der zumindest einen ersten Vorrichtung ist, die das Datenpaket bzw. den Datensatz gesendet hat.

Gemäß einer beispielhaften Ausführungsform nach dem zweiten Aspekt der Erfindung umfasst das Verfahren ferner:

- Signieren des anonymisierten Datensatzes,

wobei der signierte Datensatz ausgegeben bzw. dessen Ausgabe veranlasst wird.

Nach dem Bestimmen des anonymisierten Datensatzes, wobei beispielsweise eine Adressierungsinformation (z. B. IP-Adresse der zumindest einen ersten Vorrichtung) entfernt wird, erfolgt ein Signieren des anonymisierten Datensatzes seitens der zumindest einen zweiten Vorrichtung. Anschließend erfolgt die Ausgabe bzw. das Veranlassen der Ausgabe des signierten und anonymisierten Datensatzes. Dieses Signieren des Datensatzes erlaubt es dem Empfänger (z. B. die zumindest eine dritte Vorrichtung) des ausgegebenen signierten und anonymisierten Datensatzes die Integrität des übermittelten Datensatzes zu überprüfen. Dies kann beispielsweise basierend auf einer öffentlichen Schlüsselinformation durchgeführt werden.

Der seitens der zumindest einen dritten Vorrichtung (z. B. ein Datenerfassungs-Server, insbesondere zur Erfassung von Metrikinformationen) empfangene Datensatz, der z. B. von der zumindest einen zweiten Vorrichtung gesendet wurde, ist beispielsweise von der zumindest einen zweiten Vorrichtung signiert.

Das Überprüfen des Datensatzes umfasst das Überprüfen der Integrität des empfangenen Datensatzes. Dies kann beispielsweise basierend auf einer öffentlichen Schlüsselinformation und einer von dem Datensatz umfassten oder mit dieser übermittelten Signatur durchgeführt werden.

Das Überprüfen des Datensatzes erfolgt beispielsweise zumindest teilweise basierend auf der Signatur des empfangenen Datensatzes. Beispielsweise kann im Rahmen des Überprüfens sichergestellt werden, dass ein Abruf von zertifizierten Programmcodes an die zumindest eine dritte Vorrichtung (z. B. ein Messsystem) übermittelt wurde. Hierzu können beispielsweise proprietäre Anbieter, die ein Geheimnis (z. B. repräsentiert von einer entsprechenden Geheimnisinformation) im an die zumindest eine erste Vorrichtung übermittelten (Sensor-)Skript verstecken. Alternativ oder zusätzlich kann beispielsweise ein Überprüfen des Datensatzes mittels eines Blockchainverfahrens erfolgen, bei dem beispielsweise eine Verbindung von vorangegangenen Prüfsummen überprüft wird. Alternativ oder zusätzlich kann beispielsweise ein Überprüfen des Datensatzes mittels einer Library, die von der zumindest einen ersten Vorrichtung umfasst ist (d.h. z. B. für eine seitens der zumindest einen ersten Vorrichtung installierte Applikation der zumindest einen ersten Vorrichtung bereitgestellt wurde), erfolgen. In dem letzten Fall kann beispielsweise eine Kommunikationsverbindung zwischen der zumindest einen ersten Vorrichtung umfassend die Library und der zumindest einen dritten Vorrichtung, die das Überprüfen des Datensatzes durchführt, erfolgen.

Die von dem empfangenen Datensatz umfasste eine oder die umfassten mehreren Metrikinformationen sind beispielsweise derart anonymisiert, dass kein Rückschluss auf die Identität einer Vorrichtung, der die Informationen zur Wiedergabe bereitgestellt wurden, möglich ist. Entsprechend handelt es sich bei diesem empfangenen Datensatz um keine personenbezogenen Daten, wie sie insbesondere im Rahmen einer Datenschutzverordnung, z. B. EU-Datenschutzverordnung verstanden werden können.

Das Speichern der einen oder der mehreren Metrikinformationen erfolgt beispielsweise in einem Speicher. Der Speicher umfasst beispielsweise eine Datenbank. Der Speicher kann beispielsweise von der zumindest einen dritten Vorrichtung umfasst sein. Alternativ kann der Speicher mit der zumindest einen dritten Vorrichtung verbindbar sein, z. B. über ein Kommunikationsnetz (z. B. Internet).

Zusätzlich können optional eine oder mehrere weitere Metrikinformationen seitens der zumindest einen dritten Vorrichtung bestimmt werden. Da das ursprüngliche Bestimmen des Datensatzes umfassend die eine oder mehreren Metrikinformationen seitens der zumindest einen ersten Vorrichtung durchgeführt wird, handelt es sich in diesem Fall bei der zumindest einen dritten Vorrichtung um eine der zumindest einen ersten Vorrichtung nachgelagerte Vorrichtung. Um z. B. seitens der zumindest einen dritten Vorrichtung bestimmen zu können, ob es sich um eine erste oder wiederholte Wiedergabe der Information durch die zumindest einen erste Vorrichtung handelte, kann beispielsweise eine sogenannten Session-ID verwendet werden. Unter einer Session-ID wird insbesondere eine Information verstanden, die mehrere insbesondere miteinander verknüpfte Anfragen von einer ersten Vorrichtung bzw. dessen Nutzer zu erkennen erlaubt. Entsprechend versteht sich, dass eine derartige Session-ID nur für den Fall von der zumindest einen dritten Vorrichtung verwendet werden kann, wenn der Nutzer der zumindest einen ersten Vorrichtung explizit sein Einverständnis bzw. seinen Konsens zur Bereitstellung der Session-ID gegeben hat. Die Verwendung einer derartigen Session-ID im Rahmen der vorliegenden Erfindung nach allen Aspekten ist optional und entsprechend nicht notwendig.

Gemäß einer beispielhaften Ausführungsform nach dem dritten Aspekt der Erfindung umfasst das Verfahren ferner:

- Entschlüsseln des empfangenen Datensatzes, wobei die von dem Datensatz umfassten eine oder mehreren Metrikinformationen entschlüsselt werden.

Nach dem Entschlüsseln kann die entschlüsselte eine Metrikinformation, oder es können die entschlüsselten mehreren Metrikinformationen können ohne weitere Verarbeitung gespeichert werden.

Gemäß einer beispielhaften Ausführungsform nach dem dritten Aspekt der Erfindung wird eine (z. B. öffentliche und/oder private) Schlüsselinformation zum Entschlüsseln des Datensatzes verwendet.

Die Schlüsselinformation repräsentiert beispielsweise einen öffentlichen und/oder privaten Schlüssel. Für den Fall, dass ein öffentlicher Schlüssel zum Verschlüsseln verwendet wird, ist dieser Schlüssel beispielsweise öffentlich verfügbar, so dass diese Schlüsselinformation beispielsweise über ein Kommunikationsnetz (z. B. das Internet) von der zumindest einen ersten Vorrichtung erhalten werden kann. Die Verwendung eines öffentlichen Schlüssels erfordert es beispielsweise, dass der öffentliche Schlüssel von der zumindest einen zweiten oder dritten Vorrichtung an die zumindest eine erste Vorrichtung übermittelt wird. Dies kann beispielsweise im Rahmen der Bereitstellung des Skriptes oder der Library, das bzw. die zur Ausführung und/oder Steuerung des Verfahrens nach dem ersten Aspekt der Erfindung verwendet wird, und entsprechend an die zumindest eine erste Vorrichtung übermittelt wird, geschehen. Die zumindest eine dritte Vorrichtung hält hierzu beispielsweise einen korrespondierenden privaten Schlüssel bereit, der zur Entschlüsselung des Datensatzes verwendet werden kann.

Gemäß einer beispielhaften Ausführungsform nach dem dritten Aspekt der Erfindung umfasst das Verfahren ferner:

- Aggregieren der einen oder der mehreren Metrikinformationen mit weiteren Metrikinformationen, die basierend auf zuvor empfangenen Datensätzen gespeichert wurden.

Das Aggregieren ermöglicht beispielsweise das Bestimmen von Durchschnittsinformationen basierend auf den entsprechenden Metrikinformationen. Das Aggregieren erfolgt beispielsweise, indem die eine oder mehreren Metrikinformationen mit bereits vorhandenen (z. B. in einem Speicher gespeicherte) weiteren Metrikinformationen assoziiert werden. Entsprechend können beispielsweise die eine oder mehreren Metrikinformationen derart gespeichert werden, dass eine Verknüpfung zwischen der einen oder den mehreren Metrikinformationen mit weiteren Metrikinformationen hergestellt ist.

Beispielsweise erlaubt das Resultat des Aggregierens ferner ein Bestimmen der Anzahl von Nutzern bzw. Anzahl von deren elektronischen Geräten, die jeweils eine identische Information wiedergegeben haben. Zusätzlich oder alternativ erlaubt das Resultat des Aggregierens ferner ein Bestimmen von Standardmetriken (repräsentiert von den aggregierten einen oder mehreren Metrikinformationen), beispielsweise umfassend: i) Page Impressions, ii) Visits und/oder iii) Clients (z. B. anhand von Unique Browsern, mittels der den entsprechenden Nutzern die Information wiedergegeben wurde). Soweit verfügbar, kann die wiedergegebene Information beispielsweise mit der Anzahl von Nutzern assoziiert werden, um beispielsweise einen Indikator für eine erzielte Reichweite der Information bestimmt zu haben. Es versteht sich, dass weitere Parameter nach der vorstehend angeführten Art mit der wiedergegebenen Information verknüpft und/oder bestimmt werden können.

Zusätzlich können die aggregierte eine oder die aggregierten mehreren Metrikinformationen gespeichert werden.

Gemäß einer beispielhaften Ausführungsform nach dem dritten Aspekt der Erfindung umfasst das Verfahren ferner:

- Ausgeben bzw. Veranlassen des Ausgebens von einer oder mehreren der gespeicherten Metrikinformationen zumindest teilweise basierend auf einer empfangenen Anfrage zur Bereitstellung von einer oder mehreren der gespeicherten Metrikinformationen.

Die eine oder mehreren Metrikinformationen können basierend auf einer empfangenen Anfrage beispielsweise Dritten (z. B. Kunden) bereitgestellt werden. Insbesondere können die eine oder mehreren Metrikinformationen Dritten bereitgestellt werden, ohne personenbezogene Daten an die Dritten übermitteln zu müssen, da der Datensatz, auf dem zumindest teilweise basierend die angefragte eine oder die angefragten mehreren Metrikinformationen ausgegeben werden, nur in anonymisierte Form seitens der zumindest einen dritten Vorrichtung empfangen wurde. Folglich ist es nicht möglich, sogenannte personenbezogene Daten an einen anfragenden Dritten übermitteln zu können, da die zumindest eine dritte Vorrichtung zu keinem Zeitpunkt Kenntnis oder entsprechende personenbezogene Informationen zur Verfügung hat bzw. hatte.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekten offenbart verstanden werden.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

**Kurze Beschreibung der Figuren**

In der Zeichnung zeigt

Fig. 1 eine schematische Darstellung einer beispielhaften Ausführungsform eines Systems nach dem vierten Aspekt der vorliegenden Erfindung;

Fig. 2 ein Flussdiagramm einer beispielhaften Ausführungsform gemäß einem Verfahren nach dem ersten Aspekt der vorliegenden Erfindung, wie es z. B. von einem elektronischen Gerät 130 nach Fig. 1 ausgeführt wird;

Fig. 3 ein Flussdiagramm einer beispielhaften Ausführungsform gemäß einem Verfahren nach dem zweiten Aspekt der vorliegenden Erfindung, wie es z. B. von einem Server 140 nach Fig. 1 ausgeführt wird;

Fig. 4 ein Flussdiagramm einer beispielhaften Ausführungsform gemäß einem Verfahren nach dem dritten Aspekt der vorliegenden Erfindung, wie es z. B. von einem Server 110 nach Fig. 1 ausgeführt wird;

Fig. 5 ein Blockdiagramm eines Ausführungsbeispiels einer Vorrichtung nach dem ersten Aspekt der vorliegenden Erfindung, z. B. ein elektronisches Gerät 130 nach Fig. 1;

Fig. 6 ein Blockdiagramm eines Ausführungsbeispiels einer Vorrichtung nach dem zweiten Aspekt der vorliegenden Erfindung, z. B. ein Server 140 nach Fig. 1;

Fig. 7 ein Blockdiagramm eines Ausführungsbeispiels einer Vorrichtung nach dem dritten Aspekt der vorliegenden Erfindung, z. B. ein Server 110 nach Fig. 1; und

Fig. 8 eine schematische Darstellung einer weiteren beispielhaften Ausführungsform eines Systems nach dem vierten Aspekt der vorliegenden Erfindung.

**Detaillierte Beschreibung einiger beispielhafter Ausführungsformen der Erfindung**

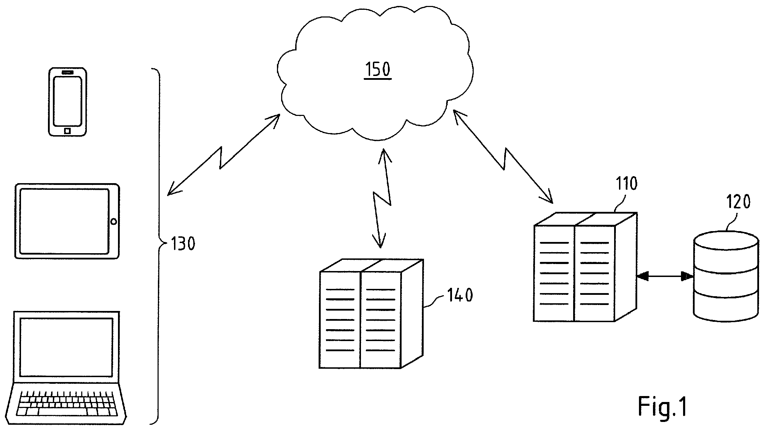

Fig.1 zeigt ein schematisches High-Level Blockdiagramm eines Systems 100 nach einem beispielhaften Aspekt der vorliegenden Erfindung. System 100 umfasst einen ersten Server 110, einen zweiten Server 140, wobei der erste und/oder der zweite Server alternativ als Server-Cloud ausgebildet sein können (z. B. eine Vielzahl von Servern, die miteinander verbunden sind, z. B. mittels des Internets, und die jeweils einen Dienst zumindest teilweise zusammen bereitstellen), und ein elektronisches Gerät 130, wobei in Fig. 1 drei verschiedene Realisationen beispielhaft gezeigt sind: ein mobiles Telefon (z. B. Smartphone), ein Tablet und ein Laptop-Computer (von oben nach unten).
Das System 100 umfasst ferner zumindest ein Kommunikationsnetz 150, über das die Entitäten des Systems 100 beispielsweise miteinander kommunizieren können. Das Kommunikationsnetz 150 ist beispielsweise das Internet. Die Kommunikation der Entitäten untereinander kann beispielsweise drahtgebunden, und/oder drahtlos erfolgen, z. B. basierend auf einer Mobilfunk oder einer Wireless Local Area Network (WLAN) basierten Kommunikation, um nur einige nicht-limitierende Beispiele zu nennen. Derart kann beispielsweise eine Mobilität des elektronischen Gerätes 130 sichergestellt werden.
Gemäß Ausführungsformen der vorliegenden Erfindung stellt das elektronische Gerät 130 beispielsweise eine Anfrage zur Bereitstellung eines Dienstes an den Server 140. Daraufhin stellt der Server 140 beispielsweise den angefragten Dienst dem anfragenden elektronischen Gerät 130 bereit. Das elektronische Gerät 130 erfasst zumindest eine Kenninformation zumindest teilweise basierend auf einer von dem bereitgestellten Dienst umfassten Information (z. B. eine Werbeinformation). Ferner bestimmt das elektronische Gerät 130 einen Datensatz umfassend eine oder mehrere Metrikinformationen, die zumindest teilweise basierend auf der erfassten zumindest einen Kenninformation bestimmt wird. Anschließend gibt das elektronische Gerät 130 den Datensatz an den Server 140 aus.
Der Server 140 bestimmt zumindest teilweise basierend auf dem von dem elektronischen Gerät 130 empfangenen Datensatz einen anonymisierten Datensatz, so dass dieser anonymisierte Datensatz keinen Rückschluss mehr auf eine Identität des elektronischen Gerätes 130 bzw. dessen Nutzer erlaubt. Dieser anonymisierte Datensatz wird anschließend von dem Server 140 an den Server 110 ausgegeben, z. B. übermittelt.
Der Server 110 überprüft zunächst, ob der empfangene Datensatz bis auf die Anonymisierung des Datensatzes durch den Server 140 einer Manipulation unterlag. Sollte keine Manipulation feststellbar sein, speichert der Server 110 die von dem empfangenen Datensatz umfassten einen oder mehreren Metrikinformationen ab, z. B. in einer von dem System 100 umfassten Datenbank 120, die von dem Server 110 umfasst sein kann, oder die alternativ mit dem Server 110 zumindest kommunikationstechnisch verbunden ist.

Beispielsweise kann der Server 110 eine Anfrage zur Bereitstellung von einer oder mehreren gespeicherten Metrikinformationen, die der Server 110 bzw. die Datenbank 120 gespeichert haben, empfangen. Beispielsweise kann ein Dritter (z. B. ein Kunde), der z. B. eine Information (z. B. eine Werbeanzeige, oder einen Newsartikel) zur Wiedergabe an einen oder mehrere Nutzer beauftragt hat, und die anschließend z. B. den Nutzern seitens eines Webpublishers (z. B. Server 140) bereitgestellt werden, eine derartige Anfrage an den Server 110 stellen. Eine derartige Anfrage kann der Kunde z. B. stellen, um beispielsweise eine Reichweite von der Werbeanzeige, die beispielsweise einer Vielzahl von elektronischen Geräten 130 bzw. deren Nutzern bereitgestellt wurde, zu bestimmen. Basierend auf der Anfrage kann der Server 110 dem Kunden anschließend beispielsweise die angefragte eine bzw. die angefragten mehreren Metrikinformationen bereitstellen., z. B. übermitteln, insbesondere ohne das es dem Kunden (und auch dem Server 110 bzw. dessen Betreiber) möglich ist, einen Rückschluss auf eine Identität derjenigen elektronischen Geräte bzw. dessen Nutzer (bzw. eine Vielzahl von elektronischen Geräten bzw. dessen Nutzer) zu ermöglichen, denen im vorliegenden nicht-limitierenden Fall jeweils die Werbeanzeige seitens des Servers 140 bereitgestellt wurde.

Optional können von dem Server 110 an den Server 140 beispielsweise Informationen, z. B. ein Skript übermittelt werden. Mittels dieses Skriptes kann beispielsweise eine Web API (Application Programming Interface) als Sensor zum Erfassen einer Sensorinformation, auf der zumindest teilweise basierend der Datensatz bestimmt werden kann, an ein oder mehrere elektronische Geräte 130 ausgeliefert, d.h. übermittelt werden, so dass die jeweiligen elektronischen Geräte 130, an die die Web API ausgeliefert wurde, einen korrespondierenden Datensatz umfassend eine oder mehrere Metrikinformationen bestimmen können.

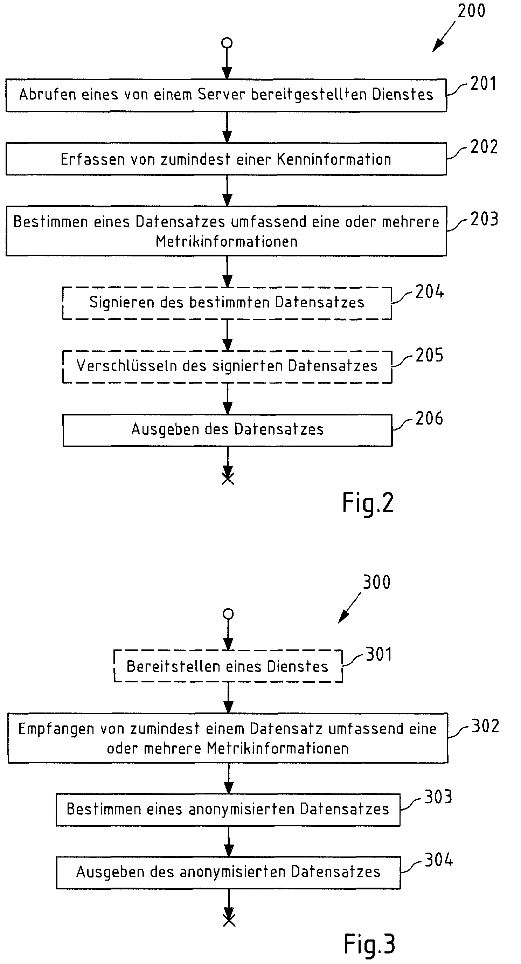

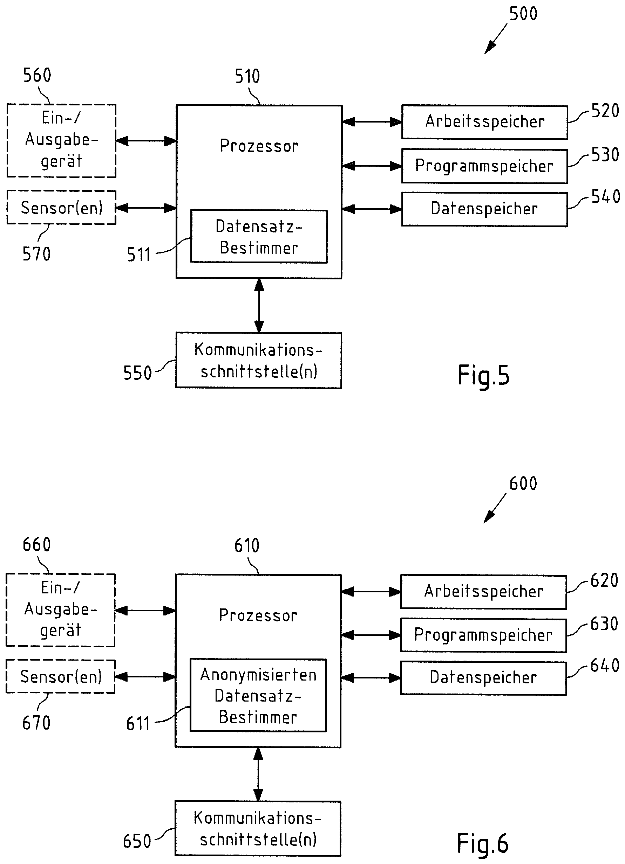

Fig. 2 stellt ein Flussdiagramm 200 einer beispielhaften Ausführungsform gemäß einem Verfahren nach dem ersten Aspekt der vorliegenden Erfindung dar, das im Kontext der vorliegenden Erfindung ausgeführt werden kann. Das Verfahren wird beispielsweise von einem elektronischen Gerät 130 nach Fig. 1 ausgeführt, das beispielsweise als Vorrichtung 500 der Fig. 5 ausgebildet sein kann.

In einem optionalen ersten Schritt 201 erfolgt ein Abrufen eines von einem Server (z. B. Server 140 nach Fig. 1) bereitgestellten Dienstes, z. B. eine Internetseite.

In einem zweiten Schritt 202 erfolgt ein Erfassen einer Kenninformation zumindest teilweise basierend auf zumindest einer Information, insbesondere eine Werbeinformation, die von einem Dienst (insbesondere der in Schritt 201 bereitgestellte Dienst) umfasst und entsprechend dem elektronischen Gerät (z. B. das elektronische Gerät 130 nach Fig. 1) bereitgestellt wurde. Die Kenninformation ist beispielsweise indikativ für eine Verweildauer des Nutzers hinsichtlich der bereitgestellten Informationen, oder indikativ dafür ist, ob seitens eines Nutzers des elektronischen Gerätes die entsprechende Information angeklickt wurde oder nicht, oder dergleichen, um nur einige nicht-limitierende Beispiele zu nennen. Entsprechend kann das Erfassen der Kenninformation zumindest teilweise basierend auf einem oder mehreren Sensoren, die beispielsweise von dem elektronischen Gerät (z. B. das elektronische Gerät 130 nach Fig. 1) umfasst sind, wie etwa einem berührungsempfindlichen Display erfolgen.

In einem dritten Schritt 203 erfolgt ein Bestimmen eines Datensatzes umfassend eine oder mehrere Metrikinformationen zumindest teilweise basierend auf der erfassten Kenninformation. Beispielsweise kann für eine spezifische Internetseite die eine oder mehrere Metrikinformationen folgendes angegeben, z. B. welche Internetseite von dem elektronischen Gerät besichtigt wurde, zu welcher Zeit bzw. welche Zeitspanne die Besichtigung erfolgte bzw. dauerte, ob es sich um eine wiederholte Besichtigung handelte oder nicht, welche Art und/oder Typ des elektronischen Gerätes zur Besichtigung verwendet wurde, welche Applikation des elektronischen Gerätes zur Besichtigung verwendet wurde, oder eine Kombination hiervon, um nur einige nicht-limitierende Beispiele zu nennen.

In einem optionalen vierten Schritt 204 erfolgt ein Signieren des bestimmten Datensatzes, so dass beispielsweise die Integrität des Datensatzes im Anschluss überprüft werden kann.

In einem optionalen fünften Schritt 205 erfolgt ein Verschlüsseln des Datensatzes, z. B. mittels eines öffentlichen Schlüssels, so dass insbesondere unberechtigte Dritte nicht an die von dem Datensatz umfassten einen oder mehreren Metrikinformationen gelangen kann.

In einem sechsten Schritt 206 erfolgt ein Ausgeben bzw. ein Veranlassen der Ausgabe des Datensatzes, z. B. an den Server 140 nach Fig. 1. Das Ausgeben erfolgt beispielsweise über ein Kommunikationsnetz (z. B. Kommunikationsnetz 150 nach Fig. 1). Beispielsweise kann die Ausgabe des Datensatzes zunächst an eine oder mehrere Entitäten erfolgen, die von dem Server 140 nach Fig. 1 verschieden sind, die aber den Datensatz anschließend an den Server 140 nach Fig. 1 als Adressaten übermitteln. Der Datensatz kann an den Server 140 nach Fig. 1 adressiert werden, da beispielsweise zuvor von dem elektronischen Gerät 130 nach Fig. 1 von dem Server 140 nach Fig. 1 die Bereitstellung eines Dienstes angefragt wurde und anschließend von dem Server 140 nach Fig. 1 entsprechend bereitgestellt wurde, bzw. der Dienst von dem Server 140 nach Fig. 1 seitens des elektronischen Gerätes 130 nach Fig. 1 abgerufen wurde. Hierdurch hat der Server 140 eine Adressierungsinformation des elektronischen Geräts 130.

Fig. 3 stellt ein Flussdiagramm 300 einer beispielhaften Ausführungsform gemäß einem Verfahren nach dem zweiten Aspekt der vorliegenden Erfindung dar, das im Kontext der vorliegenden Erfindung ausgeführt werden kann. Das Verfahren wird beispielsweise von einem Server 140 nach Fig. 1 ausgeführt, der beispielsweise als Vorrichtung 600 nach Fig. 6 ausgebildet sein kann.

In einem optionalen ersten Schritt 301 erfolgt ein Bereitstellen eines Dienstes, der z. B. von einem elektronischen Gerät 130 nach Fig. 1 angefragt wurde. Bei einem derartigen Dienst kann es sich beispielsweise um eine Internetseite des von einem Publisher betriebenen Servers (z. B. Server 140 nach Fig. 1) handeln.

In einem zweiten Schritt 302 erfolgt ein Empfangen von zumindest einem Datensatz umfassend eine oder mehrere Metrikinformationen. Der Datensatz wird beispielsweise von einem elektronischen Gerät (z. B. elektronisches Gerät 130 nach Fig. 1) an den Server 140 nach Fig. 1 übermittelt. Bei dem elektronischen Gerät, von dem der Datensatz an den Server 140 nach Fig. 1 übermittelt (z. B. gesendet) wird, handelt es sich insbesondere um dasjenige elektronische Gerät, dem in dem Schritt 301 der Dienst bereitgestellt wurde, und der z. B. zuvor von diesem elektronischen Gerät angefragt wurde.

In einem dritten Schritt 303 erfolgt ein Bestimmen eines anonymisierten Datensatzes zumindest teilweise basierend auf dem in dem Schritt 302 empfangenen Datensatz. Eine derartige Anonymisierung erfolgt beispielsweise, indem mitunter von dem Datensatz umfasste Informationen, die einen Rückschluss auf die Identität bzw. Herkunft des Datensatzes (z. B. Adressierungsinformationen, die zum Datenaustausch wie etwa zum Bereitstellen des Dienstes in dem Schritt 301) ermöglichen, aus bzw. von dem Datensatz entfernt werden.

In einem vierten Schritt 304 erfolgt ein Ausgeben bzw. ein Veranlassen der Ausgabe des anonymisierten Datensatzes, z. B. an den Server 110 nach Fig. 1. Das Ausgeben erfolgt beispielsweise über ein Kommunikationsnetz (z. B. Kommunikationsnetz 150 nach Fig. 1). Beispielsweise kann die Ausgabe des Datensatzes zunächst an eine oder mehrere Entitäten erfolgen, die von dem Server 110 nach Fig. 1 verschieden sind, die aber den Datensatz abschließend an den Server 110 nach Fig. 1 als Adressaten übermitteln. Zuvor kann optional eine Signierung des anonymisierten Datensatzes erfolgen.

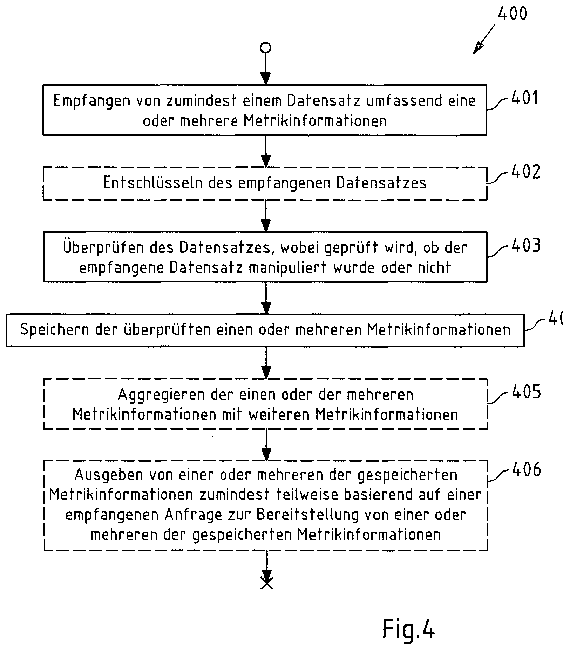

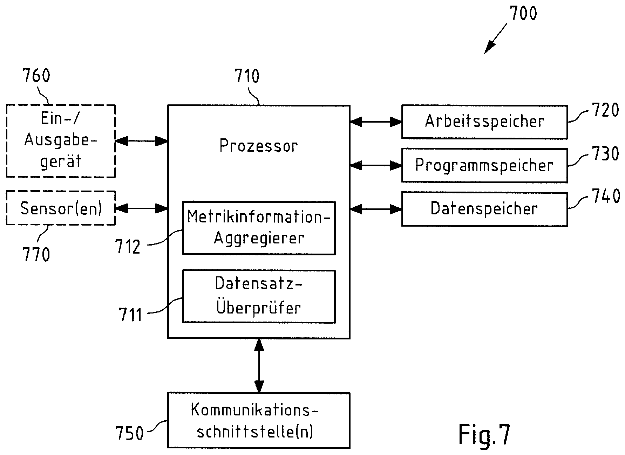

Fig. 4 stellt ein Flussdiagramm 400 einer beispielhaften Ausführungsform gemäß einem Verfahren nach dem dritten Aspekt der vorliegenden Erfindung dar, das im Kontext der vorliegenden Erfindung ausgeführt werden kann. Das Verfahren wird beispielsweise von einem Server 110 nach Fig. 1 ausgeführt, der beispielsweise als Vorrichtung 700 nach Fig. 7 ausgebildet sein kann.

In einem ersten Schritt 401 erfolgt ein Empfangen von zumindest einem Datensatz umfassend eine oder mehrere Metrikinformationen. Der Datensatz wird beispielsweise von dem Server 140 nach Fig. 1 an den Server 110 nach Fig. 1 übermittelt, beispielsweise über das Kommunikationsnetz 150 nach Fig. 1, z. B. dem Internet. Insbesondere wird der Datensatz von dem Server 140 nach Fig. 1 an eine Entität gesendet, die den Datensatz an den Server 110 nach Fig. 1 über das Internet übermittelt.

In einem optionalen zweiten Schritt 402 erfolgt ein Entschlüsseln des empfangenen Datensatzes für den Fall, dass der Datensatz zuvor verschlüsselt wurde (siehe optionaler Schritt 205 nach Fig. 2).

In einem dritten Schritt 403 erfolgt ein Überprüfen des Datensatzes, wobei geprüft wird, ob der empfangene Datensatz manipuliert wurde oder nicht. Dies kann beispielsweise mittels einer von dem Datensatz umfassten Prüfsumme, oder einer zusammen mit dem Datensatz empfangenen Prüfsumme, über die eine Veränderung der von dem Datensatz umfassten einen oder mehreren Metrikinformationen feststellbar ist, erfolgen. Alternativ oder zusätzlich kann eine Signatur des in dem Schritt 401 empfangenen Datensatzes überprüft werden.

In einem vierten Schritt 404 erfolgt ein Speicher der einen oder mehreren Metrikinformationen, die von dem überprüften Datensatz umfasst sind für den Fall, dass in Schritt 403 bestimmt wurde, dass keine Manipulation dieser Informationen stattgefunden hat. Die eine oder die mehreren Metrikinformationen werden beispielsweise in einem Speicher, wie etwa in der von dem Server 110 nach Fig. 1 umfassten oder mit diesem verbundenen Datenbank 120 nach Fig. 1 gespeichert.

In einem optionalen fünften Schritt 405 erfolgt ein Aggregieren der einen oder mehreren Metrikinformationen mit weiteren Metrikinformationen, die beispielsweise in der Datenbank 120 nach Fig. 1 bereits gespeichert sind. Derart können weitere Parameter, die z. B. einen Rückschluss über eine erzielte Reichweite von einem elektronischen Gerät bereitgestellten Informationen, wie etwa Werbeinformationen, ermöglichen. Die aggregierte Metrikinformation oder die aggregierten Metrikinformationen können ebenfalls gespeichert werden.

In einem optionalen sechsten Schritt 406 erfolgt ein Ausgeben bzw. ein Veranlassen des Ausgebens von einer oder mehreren Metrikinformationen bzw. optional die aggregierten einen oder mehreren Metrikinformationen. Beispielsweise wurde zuvor, z. B. von einem Dritten (z. B. ein Kunde des Dienstes, der z. B. mittels des Servers 110 nach Fig. 1 bereitgestellt wird) oder einer weiteren, nicht in Fig. 1 dargestellten Entität, eine Anfrage zur Bereitstellung dieser Metrikinformation(en) empfangen. Eine derartige Anfrage kann beispielsweise von einem mittels einer Information (z. B. Content) und/oder einer Werbeinformationen (z. B. Werbeanzeige) werbenden Unternehmen (als Dritte bzw. Kunde des Dienstes von dem Server 110 nach Fig. 1) stammen, da dieses ein Interesse an der Reichweite seines Contents und/oder seiner Werbeanzeige haben kann. Zum Beispiel könnte die Reichweite einen Aufschluss darüber geben, z. B. wie erfolgreich (z. B. Conversion Rate durch Anklicken der Information und/oder Werbeinformation, um nur ein nicht-limitierendes Beispiel zu nennen) der Content und/oder die Werbeanzeige war.

Fig. 5 zeigt eine schematische Darstellung einer beispielhaften Ausführungsform einer Vorrichtung, z. B. ein elektronisches Endgerät 130 nach Fig. 1, das im Kontext der vorliegenden Erfindung eingesetzt werden kann.

Die Vorrichtung 500 kann beispielsweise das elektronische Endgerät 130 nach Fig. 1 repräsentieren (und dann beispielsweise das Verfahren des Flussdiagramms 200 der Fig. 2 ausführen).

Die Vorrichtung 500 kann insofern beispielsweise ein Computer, ein Desktop-Computer, ein Server, ein Thinclient oder ein tragbarer Computer (Mobilgerät), wie etwa ein Laptop-Computer, ein Tablet-Computer, ein persönlicher digitaler Assistent (PDA) oder ein Smartphone sein. Die Vorrichtung 500 kann beispielsweise die Funktion eines Clients erfüllen.

Fig. 6 zeigt eine schematische Darstellung einer beispielhaften Ausführungsform einer Vorrichtung, z. B. einen Server oder eine Server-Cloud 140 nach Fig. 1, der im Kontext der vorliegenden Erfindung eingesetzt werden kann.

Die Vorrichtung 600 kann beispielsweise den Server 140 nach Fig. 1 repräsentieren (und dann beispielsweise das Verfahren des Flussdiagramms 300 der Fig. 3 ausführen).

Die Vorrichtung 600 kann insofern beispielsweise ein Computer, ein Desktop-Computer, ein Server, eine Server-Cloud sein, um nur einige nicht-limitierende Beispiele zu nennen. Die Vorrichtung 600 kann beispielsweise die Funktion eines Servers erfüllen.

Fig. 7 zeigt eine schematische Darstellung einer beispielhaften Ausführungsform einer Vorrichtung, z. B. einen Server oder eine Server-Cloud 110 nach Fig. 1, der im Kontext der vorliegenden Erfindung eingesetzt werden kann.

Die Vorrichtung 700 kann beispielsweise den Server 110 nach Fig. 1 repräsentieren (und dann beispielsweise das Verfahren des Flussdiagramms 400 der Fig. 4 ausführen).

Die Vorrichtung 700 kann insofern beispielsweise ein Computer, ein Desktop-Computer, ein Server, eine Server-Cloud sein, um nur einige nicht-limitierende Beispiele zu nennen. Die Vorrichtung 700 kann beispielsweise die Funktion eines Servers erfüllen.

Die jeweiligen Vorrichtungen 500, 600, 700 umfassen jeweils einen Prozessor 510, 610, 710 mit zugeordnetem Arbeitsspeicher 520, 620, 720 und Programmspeicher 530, 630, 730. Der Prozessor 510, 610, 710 führt beispielsweise Programmanweisungen aus, die im Programmspeicher 530, 630, 730 gespeichert sind. Die Programmanweisungen führen jeweils das Verfahren gemäß dem ersten, zweiten, sowie dritten Aspekt der Erfindung aus und/oder steuern diese. Damit enthält der jeweilige Programmspeicher 530, 630, 730 ein Computerprogramm nach einem beispielhaften Aspekt der Erfindung und stellt ein Computerprogrammprodukt zu dessen Speicherung dar. Vorrichtung 500, 600, 700 stellt ein Beispiel einer Vorrichtung gemäß dem ersten, zweiten, sowie dritten Aspekt der Erfindung dar.

Prozessor 510, 610, 710 der jeweiligen Vorrichtung 500, 600, 700 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Prozessor 510 umfasst beispielsweise einen Datensatz-Bestimmer 511 als funktionelle und/oder strukturelle Einheit. Datensatz-Bestimmer 511 ist beispielsweise konfiguriert, einen Datensatz umfassend eine oder mehrere Metrikinformationen (siehe Schritt 203 der Fig. 2) zu bestimmen.

Prozessor 610 umfasst beispielsweise einen anonymisierten Datensatz- Bestimmer 611 als funktionelle und/oder strukturelle Einheit. Der anonymisierte Datensatz-Bestimmer 611 ist beispielsweise konfiguriert, einen Datensatz umfassend eine oder mehrere Metrikinformationen (siehe Schritt 303 der Fig. 3) zu anonymisieren.

Prozessor 710 umfasst beispielsweise einen Datensatz-Überprüfer 711 als funktionelle und/oder strukturelle Einheit. Datensatz-Überprüfer 711 ist beispielsweise konfiguriert, einen Datensatz umfassend eine oder mehrere Metrikinformationen (siehe Schritt 403 der Fig. 4) zu überprüfen. Prozessor 710 umfasst beispielsweise einen optionalen Metrikinformation-Aggregierer 712 als funktionelle und/oder strukturelle Einheit. Metrikinformation-Aggregierer 712 ist beispielsweise konfiguriert, eine oder mehrere Metrikinformationen mit einer oder mehreren weiteren Metrikinformationen (siehe Schritt 405 der Fig. 4) zu aggregieren.

Der jeweilige Programmspeicher 530, 630, 730 kann beispielsweise ein persistenter Speicher, wie beispielsweise ein Read-Only-Memory (ROM)-Speicher sein. Der jeweilige Programmspeicher 530, 630, 730 kann beispielsweise fest mit dem jeweiligen Prozessor 510, 610, 710 verbunden sein, kann aber alternativ auch lösbar mit dem jeweiligen Prozessor 510, 610, 710 verbunden sein, beispielsweise als Speicherkarte, Diskette oder optisches Datenträgermedium (z. B. eine CD, DVD, oder Bluray). In dem Programmspeicher 530, 630, 730, oder in einem separaten Speicher, können auch weitere Informationen abgespeichert sein. Zum Beispiel ist der jeweilige Programmspeicher 530, 630, 730 ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Der jeweilige Arbeitsspeicher 520, 620, 720 wird beispielsweise zur Speicherung temporärer Ergebnisse während der Abarbeitung der Programmanweisungen genutzt, es handelt sich hierbei beispielsweise um einen flüchtigen Speicher, wie beispielsweise einen Random-Access-Memory (RAM)-Speicher. Der jeweilige Arbeitsspeicher 520, 620, 720 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Der jeweilige Datenspeicher 540, 640, 740 ist beispielsweise ein nicht-flüchtiger Speicher. Der jeweilige Datenspeicher 540, 640, 740 ist beispielsweise ein FLASH-Speicher (oder ein Teil davon), ein ROM, PROM, EPROM und EEPROM Speicher (oder ein Teil davon) oder ein Festplattenspeicher (oder ein Teil davon), um nur einige nicht-limitierende Beispiele zu nennen. Datenspeicher 740 kann beispielsweise eine oder mehrere Metrikinformationen, und/oder aggregierte Metrikinformationen speichern.

Der jeweilige Prozessor 510, 610, 710 ist ferner operativ mit einer oder mehreren Kommunikationsschnittstellen 550, 650, 760, die jeweils von der jeweiligen Vorrichtung 500, 600, 700 umfasst sind, verbunden, mit der beispielsweise ein Informationsaustausch mit anderen Vorrichtungen möglich ist (siehe die gezackten Pfeile in Fig. 1). Der jeweilige Prozessor 510, 610, 710 steuert die jeweilige(n) Kommunikationsschnittstelle(n) 550, 650, 760, welche beispielsweise eine Netzwerkschnittstelle sein kann und als Netzwerkkarte, Netzwerkmodul und/oder Modem ausgebildet sein kann. Die jeweilige(n) Kommunikationsschnittstelle(n) 550, 650, 760 ist insbesondere dazu eingerichtet, eine Verbindung der Vorrichtung 500, 600, 700 mit anderen Vorrichtungen, insbesondere über ein (drahtloses) Kommunikationssystem, beispielsweise ein Netzwerk, herzustellen und mit diesen zu kommunizieren. Die jeweilige(n) Kommunikationsschnittstelle(n) 550, 650, 760 kann beispielsweise Daten (über das Kommunikationssystem) empfangen und an den jeweiligen Prozessor 510, 610, 710 weiterleiten und/oder Daten von Prozessor 510, 610, 710 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Die jeweilige Vorrichtung 500, 600, 700 kann auch weitere Komponenten enthalten, wie beispielsweise einen oder mehreren Sensoren 570, 670, 770, oder ein Ein- und/oder Ausgabegerät 560, 660, 760. Der jeweilige Prozessor 510, 610, 710 kann beispielsweise das jeweilige Ein-/Ausgabegerät 560, 660, 760 steuern. Ein-/Ausgabegerät 560, 660, 760 ist beispielsweise eine Tastatur, eine Maus, eine Anzeigeeinheit, ein Mikrofon, ein berührungsempfindliches Display, ein Lautsprecher, ein Lesegerät, ein Laufwerk und/oder eine Kamera. Ein-/Ausgabegerät 560, 660, 760 kann beispielsweise Eingaben eines Benutzers aufnehmen und an den jeweiligen Prozessor 510, 610, 710 weiterleiten und/oder Informationen für den Benutzer von dem jeweiligen Prozessor 510, 610, 710 empfangen und ausgeben.

Die folgenden Ausführungsbeispiele sollen ebenfalls als offenbart verstanden werden:

Die Verfahren nach allen Aspekten der Erfindung können beispielsweise von drei Entitäten durchgeführt werden.

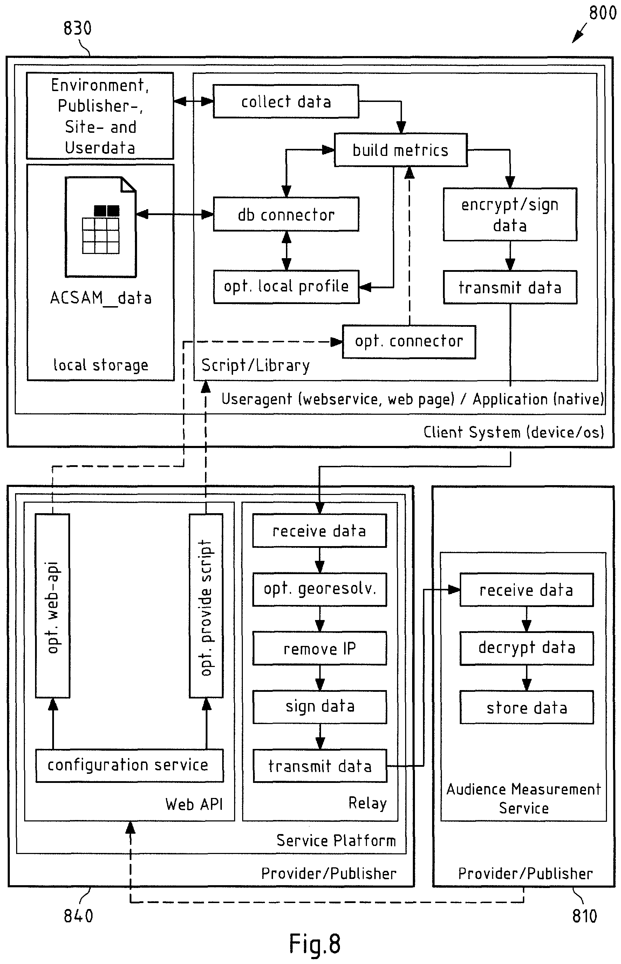

Fig. 8 stellt eine schematische Darstellung einer weiteren beispielhaften Ausführungsform eines Systems 800 nach dem vierten Aspekt der vorliegenden Erfindung dar, wobei das System drei Entitäten 810, 830, 840 umfasst.

Die Entität 830 ist beispielsweise eine Vorrichtung 500 nach Fig. 5, die ein Verfahren nach dem ersten Aspekt der Erfindung, z. B. das Flussdiagramm 200 nach Fig. 2 ausführt und/oder steuert.

Die Entität 840 ist beispielsweise eine Vorrichtung 600 nach Fig. 6, die ein Verfahren nach dem zweiten Aspekt der Erfindung, z. B. das Flussdiagramm 300 nach Fig. 3 ausführt und/oder steuert.

Die Entität 810 ist beispielsweise eine Vorrichtung 700 nach Fig. 7, die ein Verfahren nach dem dritten Aspekt der Erfindung, z. B. das Flussdiagramm 400 nach Fig. 4 ausführt und/oder steuert.

Insbesondere führen die Entitäten 810, 830, 840 zusammen ein jeweiliges Verfahren nach dem ersten, zweiten und dritten Aspekt aus und/oder steuern diese.

a) Entität 830:

Ein Skript oder eine Library als Einheit aus Sensor und Berechnungseinheit integriert in eine Internetseite oder eine Applikation auf einem Client (z. B. ein mobiles Endgerät) eines Nutzers;

b) Entität 840:

Eine Serviceplattform, die durch einen Publisher, Inhaltsanbieter oder Provider der jeweiligen Internetseite oder Applikation betrieben wird;

c) Entität 810:

Ein vom Betreiber eines Messsystems beispielsweise zur Bestimmung der Reichweite von Werbemitteln im Internet, betriebener zentraler Systemteil, auf dem alle Messwerte zusammenlaufen, entschlüsselt, aggregiert und gespeichert werden.

Zu a):

Das Skript bzw. die Library sammelt Informationen aus der Systemumgebung, der Internetseite oder der Applikation und stellt diese der Funktion zur Berechnung von Metriken zur Verfügung. Es kann erforderlich sein, dass für diverse Metriken zusätzlich abgelegte Mappings, die nicht direkt im Skript oder der Library abgelegt werden können, benötigt werden. Aus diesem Grund verfügt das Skript oder die Library über einen optionalen Connector, der beispielsweise über eine zentrale API zusätzliche Informationen in die Berechnung der Metriken ziehen kann. Im Abgleich zu Informationen, die im lokalen Speicher der Internetseite oder Applikation vorliegen, berechnet die Funktion die gewünschten Metriken.

Das Ergebnis aus dem Prozess der Berechnung von Metriken ist ein Datensatz, die die gesammelten Informationen auf dem System bzw. dem Inhalt jeweils um fertig berechnete Metriken ergänzt. Im einfachsten Fall bedeutet dies, für eine spezifische Internetseite werden die Metriken angegeben, z. B. folgendermaßen:

$$\{\text{„site\_x“: }\{\text{„pi“:}1,\text{ „visit“:}1,\text{ „client“:}\{\text{„hour“:}1,\text{ „day“:}1,\ ...\ \},\ ...\}\ ...\}.$$

Besonders an diesem Datensatz ist, dass er ohne Identifier (Client-IDs, Cookies, Device- oder Applikation-Identifier, ...) auskommt, wobei für spätere Auswertungen ein Mitversenden des Identifiers weiterhin möglich ist, z.B. falls der Nutzer Teil eines (z. B. freiwilligen und/oder vergüteten) Panels ist und es im Vorhinein erlaubt hat, dass seine übertragenen Nutzungsinformationen in Verbindung gebracht werden dürfen (z. B. über den Identifier), z.B. für forscherische Zwecke. Hierzu kann auch z. B. eine Session-ID gehören.

Optional kann der berechnete Datensatz zu einem Profil lokal auf dem Clientsystem aufsummiert werden.

Ein wesentlicher erfinderische Inhalt der Entität 830 ist, dass sie in der Lage ist, Metriken (repräsentiert von der einen oder den mehreren Metrikinformation) zu bilden (auch jene, wie einen Visit, der nach Zusammenhängen in den Daten verlangt) ohne dabei auf einen Identifier zurückgreifen zu müssen. Dabei bedient sich die Entität 830 des Rückgriffs auf Zeitstempel, welche im local storage der Entität 830 abgelegt und aktualisiert werden und auf welchen relativ zur aktuellen Zeit die Metriken gebildet werden.

Der berechnete Datensatz wird anschließend signiert, verschlüsselt und an die unter b) vorstehend aufgeführte Entität 840 weitergeleitet.

Zur Verschlüsselung wird ein öffentlicher Schlüssel ausgegeben. Dieser Schlüssel liegt auch auf der Vorrichtung 840 und wird über das Script-Providing der Web API an das Clientsystem (Entität 830) geliefert. (Eine direkte Kommunikation mit 840 ist also nicht nötig).

Zur Signatur der Daten kann folgendes durchgeführt werden:

a.) sicherstellen, dass der der Abruf von zertifizierten Programmcode an das Messsystem übermittelt wurde (hierfür gibt es proprietäre Anbieter, die ein Geheimnis im JavaScript-Code des Sensorscriptes verstecken);
b.) Bedienung z.B. des Blockchainverfahrens über die Verbindung vorangegangener Prüfsummen;
c.) für native Umsetzung als Library für Applications.

Zu b):

Die im Verantwortungsbereich des Publishers, Inhaltsanbieters oder Providers betriebene Serviceplattform (Entität 840) besteht im Wesentlichen aus zwei Funktionsteilen: Der Bereich Web-API liefert dabei das im Falle der Messung einer Internetseite benötigte Skript. Über einen Konfigurationsservice können Daten in der Plattform zur Verfügung gestellt werden, welche zum Abruf in das Skript gerendert oder, z. B. in Form von Mapping-Services, dem Connector des Skriptes oder der Library unter a) zur Verfügung gestellt werden.

Der zweite wesentliche Funktionsteil ist ein Relaying-Service, der den verschlüsselten Datensatz, der von dem Skript oder der Library versendet wird, entgegen nimmt. Da sich im Header der Kommunikation die Host-IP des Clients befindet, sind an dieser Stelle optional noch Verarbeitungen möglich (z. B. IP-Adresse zu Geolokation). Diese Ergebnisse dieser optionalen Auswertung(en) werden außerhalb des verschlüsselten Datensatzes gespeichert - der Datensatz kann, mangels passendem Schlüssel im Relaying-Service nicht geöffnet werden. Anschließend wird die Host-IP des Clients entfernt und der verschlüsselte Datensatz wird erneut signiert und an den zentralen Teil des Messsystems (vgl. c); Entität 810) weitergeleitet.

Zu c):

Der über den Relaying-Service weitergeleitete verschlüsselte Datensatz wird zunächst entschlüsselt. Anschließend kann der Datensatz sowohl plain, als auch in Datenbanksystemen (z. B. als Aggregat), gespeichert bzw. weiter ausgewertet und angezeigt werden.

Beispielhafte Ausführungsformen gemäß aller Aspekte der Erfindung haben einen oder mehrere der folgenden Vorteile:

- Es werden weniger, nur fertig aufsummierbare und anonyme Daten übertragen.

- Ein, wie auch immer gearteter Identifier, für den Nutzer oder das Clientsystem wird auch dann nicht benötigt, wenn komplexe Metriken gebildet werden sollen, welche in marktüblichen Systemen nach einem eben solchen verlangen, um z.B. historische Daten eines Nutzers in Verbindung zu setzen.

- Bezugnehmend auf a) ist eine zentrale Berechnung von AM-Metriken nicht mehr erforderlich, wodurch sich Berechnungsaufwände minimieren und insbesondere Zeitaufwände für diese Berechnungen minimieren.

- Es gibt keine direkte oder indirekte Beziehung zwischen einem Betreiber eines Messsystems und einem Client (z. B: Endgerät eines Nutzers). Daher besteht keine sogenannte 3rd-Party-Problematik.

- Bezugnehmend auf c) wird eine Manipulation an den erhobenen Daten, trotz fehlender Beziehung unterbunden.

- Die jeweiligen Verfahren gemäß dem ersten, zweiten und/oder dritten Aspekt der Erfindung lassen sich ferner, z. B. bei vorliegendem Einverständnis eines jeweiligen Nutzers, um harte Identifikationsmerkmale ergänzen (wie z. B. Client-IDs, Cookies, Device- oder Applikation-Identifier, um nur einige nicht-limitierende Beispiele zu nennen).

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, und/oder miteinander verbunden werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1.  Verfahren, durchgeführt von zumindest einer ersten Vorrichtung, umfassend:

    - Erfassen von zumindest einer Kenninformation, wobei die zumindest eine erfasste Kenninformation indikativ für zumindest einen Parameter ist, der zumindest eine zumindest einem Nutzer wiedergegebene Information charakterisiert;
    - Bestimmen eines Datensatzes umfassend eine oder mehrere Metrikinformationen, wobei die jeweilige Metrikinformation indikativ für ein Bewertungskriterium der erfassten zumindest einen Kenninformation ist, wobei der Datensatz zumindest teilweise basierend auf der zumindest einen erfassten Kenninformation bestimmt wird; und
    - Ausgeben bzw. Veranlassen des Ausgebens des Datensatzes.

2.  Verfahren nach Anspruch 1, wobei der Datensatz ferner zumindest teilweise basierend auf zumindest einer lokalen Profilinformation bestimmt wird.

3.  Verfahren nach einem der vorhergehenden Ansprüche, wobei die zumindest eine Kenninformation einen oder mehrere der folgenden Parameter i) bis iv) hinsichtlich der wiedergegebenen Information charakterisiert:

    i) Identifier eines dem zumindest einen Nutzer bereitgestellten Dienstes;
    ii) Datums-, Zeit- und/oder Ortsinformation indikativ für ein Datum, eine Zeit und/oder einen Ort hinsichtlich des dem zumindest einen Nutzer bereitgestellten Dienstes;
iii) Besuchsinformation hinsichtlich der wiedergegebenen Information; und
iv) Clientinformation indikativ für einen Typ der Vorrichtung, welcher der Dienst bereitgestellt wurde.

4. Verfahren nach einem der vorhergehenden Ansprüche, das Verfahren ferner umfassend:

- Signieren des bestimmten Datensatzes; und/oder
- Verschlüsseln des Datensatzes bzw. des signierten Datensatzes;
wobei der signierte und/oder verschlüsselte Datensatz ausgegeben bzw. dessen Ausgabe veranlasst wird.

5. Verfahren nach einem der vorhergehenden Ansprüche, wobei die zumindest eine Kenninformation zumindest teilweise basierend auf einem der Vorrichtung bereitgestellten Dienst erfasst wird.

6. Verfahren nach Anspruch 4 oder Anspruch 5, wobei eine Schlüsselinformation zum Verschlüsseln des bestimmten Datensatzes verwendet wird.

7. Verfahren, durchgeführt von zumindest einer zweiten Vorrichtung, umfassend:

- Empfangen von zumindest einem Datensatz umfassend eine oder mehrere Metrikinformationen, wobei die jeweilige Metrikinformation indikativ für ein Bewertungskriterium einer erfassten zumindest einen Kenninformation ist, wobei die zumindest eine Kenninformation indikativ für zumindest einen Parameter ist, der zumindest eine zumindest einem Nutzer wiedergegebene Information charakterisiert;
- Bestimmen eines anonymisierten Datensatzes, wobei eine oder mehrere Identifikationsinformationen, die von dem Datensatz umfasst sind, und einen Identifikation auf die Herkunft des Datensatz und/oder der von dem Datensatz umfassten einen oder mehreren Metrikinformationen zulässt, entfernt werden; und
- Ausgeben bzw. Veranlassen der Ausgabe des anonymisierten Datensatzes.

8. Verfahren nach Anspruch 7, wobei vor dem Empfangen des Datensatzes ein Dienst bereitgestellt wird, wobei der empfangene Datensatz zumindest teilweise basierend auf einer von dem bereitgestellten Dienst umfassten Information bestimmt wurde.

9. Verfahren nach Anspruch 7 oder Anspruch 8, wobei im Rahmen der Bereitstellung des Dienstes Adressierungsinformationen zur Übermittlung des Dienstes bzw. von dem Dienst umfassten Informationen und zum Empfang des Datensatzes übermittelt werden.

10. Verfahren nach einem der Ansprüche 7 bis 9, wobei die zumindest eine Kenninformation einen oder mehrere der folgenden Parameter i) bis iv) hinsichtlich der wiedergegebenen Information charakterisiert:

i) Identifier eines dem zumindest einen Nutzer bereitgestellten Dienstes;
ii) Datums-, Zeit- und/oder Ortsinformation indikativ für ein Datum, eine Zeit und/oder einen Ort hinsichtlich des dem zumindest einen Nutzer bereitgestellten Dienstes;
iii) Besuchsinformation hinsichtlich der wiedergegebenen Information; und
iv) Clientinformation indikativ für einen Typ der Vorrichtung, welcher der Dienst bereitgestellt wurde.

11. Verfahren, durchgeführt von zumindest einer dritten Vorrichtung, umfassend:

- Empfangen von zumindest einem Datensatz umfassend eine oder mehrere Metrikinformationen, wobei die jeweilige Metrikinformation indikativ für ein Bewertungskriterium einer erfassten zumindest einen Kenninformation ist, wobei die zumindest eine Kenninformation indikativ für zumindest einen Parameter ist, der zumindest eine zumindest einem Nutzer wiedergegebene Information charakterisiert, wobei sowohl der Datensatz als auch die von dem Datensatz umfassten eine oder mehreren Metrikinformationen anonymisiert sind;
- Überprüfen des Datensatzes, wobei geprüft wird, ob der empfangene Datensatz manipuliert wurde oder nicht; und
- Speichern der überprüften einen oder mehreren Metrikinformationen.

12. Verfahren nach Anspruch 11, ferner umfassend:

- Entschlüsseln des empfangenen Datensatzes, wobei die von dem Datensatz umfassten eine oder mehreren Metrikinformationen entschlüsselt werden.

**13.** Verfahren nach Anspruch 11 oder Anspruch 12, wobei eine Schlüsselinformation zum Entschlüsseln des Datensatzes verwendet wird.

**14.** Verfahren nach einem der Ansprüche 11 bis 13, ferner umfassend:

- Aggregieren der einen oder der mehreren Metrikinformationen mit weiteren Metrikinformationen, die basierend auf zuvor empfangenen Datensätzen gespeichert wurden.

**15.** Verfahren nach einem der Ansprüche 11 bis 14, wobei die zumindest eine Kenninformation einen oder mehrere der folgenden Parameter i) bis iv) hinsichtlich der wiedergegebenen Information charakterisiert:

i) Identifier eines dem zumindest einen Nutzer bereitgestellten Dienstes;
ii) Datums-, Zeit- und/oder Ortsinformation indikativ für ein Datum, eine Zeit und/oder einen Ort hinsichtlich des dem zumindest einen Nutzer bereitgestellten Dienstes;
iii) Besuchsinformation hinsichtlich der wiedergegebenen Information; und
iv) Clientinformation indikativ für einen Typ der Vorrichtung, welcher der Dienst bereitgestellt wurde.

**16.** Verfahren nach einem der Ansprüche 11 bis 15, ferner umfassend:

- Ausgeben bzw. Veranlassen des Ausgebens von einer oder mehreren der gespeicherten Metrikinformationen zumindest teilweise basierend auf einer empfangenen Anfrage zur Bereitstellung von einer oder mehreren der gespeicherten Metrikinformationen.

**17.** System, umfassend:

- zumindest eine erste Vorrichtung, die dazu ausgebildet und/oder eingerichtet ist ein Verfahren nach einem der Ansprüche 1 bis 6 ausführen;
- zumindest eine zweite Vorrichtung, die dazu ausgebildet und/oder eingerichtet ist ein Verfahren nach einem der Ansprüche 7 bis 10 ausführen; und
- zumindest eine dritte Vorrichtung, die dazu ausgebildet und/oder eingerichtet ist ein Verfahren nach einem der Ansprüche 11 bis 16 ausführen.

Fig.1

200

Abrufen eines von einem Server bereitgestellten Dienstes — 201

Erfassen von zumindest einer Kenninformation — 202

Bestimmen eines Datensatzes umfassend eine oder mehrere Metrikinformationen — 203

Signieren des bestimmten Datensatzes — 204

Verschlüsseln des signierten Datensatzes — 205

Ausgeben des Datensatzes — 206

## Fig.2

300

Bereitstellen eines Dienstes — 301

Empfangen von zumindest einem Datensatz umfassend eine oder mehrere Metrikinformationen — 302

Bestimmen eines anonymisierten Datensatzes — 303

Ausgeben des anonymisierten Datensatzes — 304

## Fig.3

400

Empfangen von zumindest einem Datensatz umfassend eine oder mehrere Metrikinformationen — 401

Entschlüsseln des empfangenen Datensatzes — 402

Überprüfen des Datensatzes, wobei geprüft wird, ob der empfangene Datensatz manipuliert wurde oder nicht — 403

Speichern der überprüften einen oder mehreren Metrikinformationen — 4(

Aggregieren der einen oder der mehreren Metrikinformationen mit weiteren Metrikinformationen — 405

Ausgeben von einer oder mehreren der gespeicherten Metrikinformationen zumindest teilweise basierend auf einer empfangenen Anfrage zur Bereitstellung von einer oder mehreren der gespeicherten Metrikinformationen — 406

Fig.4

500

560                510                                              520

Ein-/
Ausgabe-              Prozessor                    Arbeitsspeicher      520
gerät
                                                   Programmspeicher     530

Sensor(en)                                          Datenspeicher       540

570      511    Datensatz-
               Bestimmer

                Kommunikations-
550            schnittstelle(n)                    Fig.5

600

660                610                                              620

Ein-/
Ausgabe-              Prozessor                    Arbeitsspeicher      620
gerät
                                                   Programmspeicher     630

Sensor(en)                                          Datenspeicher       640

670      611    Anonymisierten
               Datensatz-
               Bestimmer

                Kommunikations-
650            schnittstelle(n)                    Fig.6

Fig.7

830

800

**Client System (device/os)**

**Useragent (webservice, web page) / Application (native)**

local storage

Environment, Publisher-, Site- and Userdata

ACSAM_data

Script/Library

collect data

build metrics

db connector

opt. local profile

encrypt/sign data

transmit data

opt. connector

**Provider/Publisher**

**Service Platform**

Web API

opt. web-api

opt. provide script

configuration service

Relay

receive data

opt. georesolv.

remove IP

sign data

transmit data

**Provider/Publisher**

**Audience Measurement Service**

receive data

decrypt data

store data

840

810

Fig.8

Europäisches
Patentamt

European
Patent Office

Office européen
des brevets

**EUROPÄISCHER RECHERCHENBERICHT**

Nummer der Anmeldung

EP 18 15 2840

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 9 275 398 B1 (KUMAR NEIL RAJ [US] ET AL) 1. März 2016 (2016-03-01) | 1-10 | INV. G06F21/62 |
| A | * Spalte 6, Zeile 7 - Spalte 6, Zeile 50 * * Ansprüche 5-15 * * Abbildung 5 * ----- | 11-17 | G06Q30/02 ADD. H04L29/06 |
| A | Anonymous: "Anonymizer - Wikipedia", , 15. September 2016 (2016-09-15), XP055483699, Gefunden im Internet: URL:https://web.archive.org/web/2016091521 5001/https://de.wikipedia.org/wiki/Anonymi zer [gefunden am 2018-06-13] * Seite 1 * ----- | 1-17 | H04W12/02 G06Q30/06 |
| A | US 2010/042718 A1 (MORRIS ROBERT P [US]) 18. Februar 2010 (2010-02-18) * Absatz [0002] - Absatz [0007] * * Absatz [0014] * * Absatz [0032] - Absatz [0034] * * Ansprüche 1-7, 14-17, 28-34 * ----- | 1-17 | |
| A | US 2009/287515 A1 (MEHTA SATISH [US] ET AL) 19. November 2009 (2009-11-19) * Absatz [0001] - Absatz [0014] * * Absatz [0025] - Absatz [0039] * * Ansprüche 1-18 * ----- | 1-17 | |

RECHERCHIERTE SACHGEBIETE (IPC)

G06F
G06Q
H04L
H04W

Der vorliegende Recherchenbericht wurde für alle Patentansprüche erstellt

| Recherchenort | Abschlußdatum der Recherche | Prüfer |
|---|---|---|
| München | 15. Juni 2018 | Bakdi, Idir |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes
    Dokument

EPO FORM 1503 03.82 (P04C03)

**EP 3 514 721 A1**

## ANHANG ZUM EUROPÄISCHEN RECHERCHENBERICHT
## ÜBER DIE EUROPÄISCHE PATENTANMELDUNG NR.

EP 18 15 2840

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-06-2018

| Im Recherchenbericht angeführtes Patentdokument | Datum der Veröffentlichung | Mitglied(er) der Patentfamilie | Datum der Veröffentlichung |
|---|---|---|---|
| US 9275398 B1 | 01-03-2016 | KEINE | |
| US 2010042718 A1 | 18-02-2010 | US 2006230058 A1<br>US 2010042718 A1<br>WO 2006110850 A2 | 12-10-2006<br>18-02-2010<br>19-10-2006 |
| US 2009287515 A1 | 19-11-2009 | KEINE | |

EPO FORM P0461

Für nähere Einzelheiten zu diesem Anhang : siehe Amtsblatt des Europäischen Patentamts, Nr.12/82

27